(19) Europäisches Patentamt
European Patent Office
Office européen des brevets

(11) **EP 4 716 085 A1**

(12) **EUROPEAN PATENT APPLICATION**

(43) Date of publication:
**25.03.2026 Bulletin 2026/13**

(21) Application number: **25177256.2**

(22) Date of filing: **19.05.2025**

(51) International Patent Classification (IPC):
**H02M 1/42** $^{(2007.01)}$    **H02M 3/00** $^{(2006.01)}$
**H02M 5/293** $^{(2006.01)}$    **H02M 7/219** $^{(2006.01)}$
**H02M 1/12** $^{(2006.01)}$

(52) Cooperative Patent Classification (CPC):
**H02M 1/425; H02M 1/4241; H02M 3/01;**
**H02M 5/293; H02M 7/219;** H02M 1/12

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **18.09.2024 CN 202411305520**

(71) Applicant: **Vertiv Corporation**
**Westerville, OH 43082 (US)**

(72) Inventors:
• **LI, Linde**
**Shenzhen 518055 (CN)**
• **LI, Jian**
**Shenzhen 518055 (CN)**
• **SHOU, Fujun**
**Shenzhen 518055 (CN)**
• **MO, Zhigang**
**Shenzhen 518055 (CN)**
• **CHEN, Shumei**
**Shenzhen 518055 (CN)**

(74) Representative: **Harden, Henry Simon et al**
**Kilburn & Strode LLP**
**Lacon London**
**84 Theobalds Road**
**London WC1X 8NL (GB)**

(54) **THREE-PHASE SINGLE-STAGE AC-DC CONVERTER AND CONTROL METHOD AND CONTROL APPARATUS THEREFOR**

(57) The present disclosure provides a three-phase single-stage AC-DC converter and control method and control apparatus therefor, with which conversion efficiency and power density of the AC-DC converter are improved. The converter includes a three-phase matrix switching circuit, a resonant circuit, an isolation circuit and a rectifier circuit. The three-phase matrix switching circuit is connected to a three-phase AC power and includes three independent switch branches. Each of the switch branches includes an upper bridge arm and a lower bridge arm. An intermediate point between the upper bridge arm and the lower bridge arm in each of the switch branches is connected to a phase of AC input. Each bridge arm includes one bidirectional switch component or two switch components connected in series in reverse. The resonant circuit includes a resonant capacitor, a resonant inductor and an excitation inductor which are connected in series between a common endpoint of upper bridge arms of the three switch branches and a common endpoint of lower bridge arms of the three switch branches. A side of the isolation circuit is connected to the resonant circuit and another side thereof is connected to the rectifier circuit. The rectifier circuit includes at least two switch components. An input side of the rectifier circuit is connected to the isolation circuit, and an output side of the rectifier circuit is connected to a load device.

FIG. 2

## Description

This application claims the priority to Chinese Patent Application No. 202411305520.3, titled "Three-Phase Single-Stage AC-DC Converter and Control Method and Control Apparatus Therefor", filed on September 18, 2024 with the China National Intellectual Property Administration, which is incorporated herein by reference in its entirety.

## FIELD

The present disclosure relates to the technical field of power converters, and in particular to a three-phase single-stage AC-DC converter and a control method and an apparatus therefor, a device, a medium and a program product.

## BACKGROUND

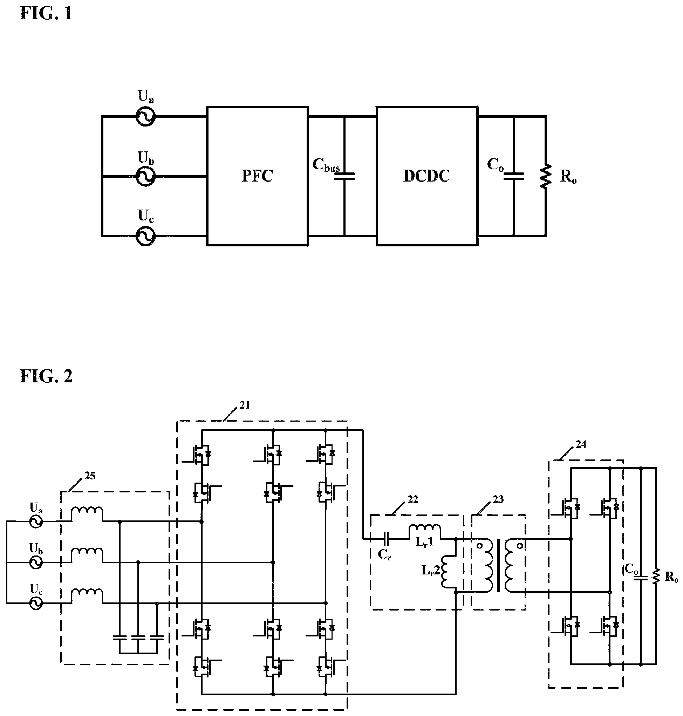

A conventional alternating current (AC)-direct current (DC) converter, as shown in Figure 1, usually has a two-stage topology including a power factor correction (PFC) circuit and a DC-DC conversion circuit.

The front-stage PFC circuit is for controlling an input current to achieve a high power factor (PF) and a low total harmonic distortion (THD). The rear-stage DC-DC conversion circuit is for controlling an output voltage and an output current to ensure a stability of the output voltage and the output current under different operating conditions.

However, the two-stage topology requires two-stage switching devices and an intermediate bus capacitor $C_{bus}$, which limits conversion efficiency and power density of the converter to a certain extent.

## SUMMARY

The present disclosure provides a three-phase single-stage AC-DC converter and a control method and an apparatus therefor, a device, a medium and a program product, with which conversion efficiency and a power density of the AC-DC converter are improved.

In a first aspect, an embodiment of the present disclosure provides a three-phase single-stage AC-DC converter. The three-phase single-stage AC-DC converter includes: a three-phase matrix switching circuit, a resonant circuit, an isolation circuit, and a rectifier circuit, wherein

the three-phase matrix switching circuit is connected to a three-phase AC power and includes three independent switch branches, each of the switch branches includes an upper bridge arm and a lower bridge arm, an intermediate point between the upper bridge arm and the lower bridge arm in each of the switch branches is connected to a phase of AC input, and each bridge arm includes one bidirectional switch component or two switch components which are connected in series in reverse;

the resonant circuit includes a resonant capacitor, a resonant inductor and an excitation inductor which are connected in series between a common endpoint of upper bridge arms of the three switch branches and a common endpoint of lower bridge arms of the three switch branches;

a side of the isolation circuit is connected to the resonant circuit and another side of the isolation circuit is connected to the rectifier circuit; and

the rectifier circuit includes at least two switch components, an input side of the rectifier circuit is connected to the isolation circuit, and an output side of the rectifier circuit is connected to a load device.

Compared with the conventional AC-DC converter, the three-phase single-stage AC-DC converter provided in the present disclosure only needs a one-stage switching network and does not need an intermediate bus capacitor, thereby having improved conversion efficiency and improved power density.

In a possible embodiment, the converter further includes a three-phase filter circuit connected between the three-phase AC power and the three-phase matrix switching circuit. The three-phase filter circuit includes three filter branches, and each of the filter branches is connected to a phase of AC input.

In a possible embodiment, the converter further includes a filter capacitor connected between the rectifier circuit and the load device, and the filter capacitor filters an output of the rectifier circuit.

In a possible embodiment, the rectifier circuit includes a full-bridge rectifier circuit and a half-bridge rectifier circuit.

In a possible embodiment, the isolation circuit includes a transformer. A primary side of the transformer is connected in parallel with the excitation inductor, and a secondary side of the transformer is connected to the rectifier circuit.

In a second aspect, an embodiment of the present disclosure provides a control method for the three-phase single-stage AC-DC converter as provided in the first aspect. The method includes:

obtaining input parameters of a three-phase AC power and output parameters of a rectifier circuit in real time;

determining duty cycles of driving signals for respective phases based on the input parameters of the three-phase AC power;

determining wave-generating parameters of the rectifier circuit based on the output parameters of the rectifier circuit;

generating driving signals of respective switch components in a three-phase matrix switching circuit and the rectifier circuit, based on the determined duty cycles of driving signals for respective phases and the wave-generating parameters of the rectifier circuit; and

driving corresponding switch components by using the generated driving signals of respective switch components.

In the above control method, on one hand, the input parameters of the three-phase AC power are obtained in real time, the duty cycles of driving signals for respective phases are determined based on the obtained input parameters, and the driving signals are generated based on the duty cycles of driving signals for respective phases so as to control switch components of corresponding switch branches. In this way, control of an input current of the three-phase AC power is realized. On the other hand, the output parameters of the rectifier circuit are obtained, and the wave-generating parameters of the rectifier circuit are determined based on the output parameters of the rectifier circuit. Driving signals are generated based on the wave-generating parameters, so as to control corresponding switch components in the rectifier circuit. In this way, control of an output voltage and an output current is realized.

With the control method provided in the embodiment of the present disclosure, the input current, the output voltage and the output current are controlled, so that the three-phase single-stage AC-DC converter has a strong harmonic suppression capability and the THD of the input current is small. Besides, all switch components are enabled to be soft-turned on. Therefore, the efficiency of the three-phase single-stage AC-DC converter is improved.

In a possible embodiment, determining duty cycles of driving signals for respective phases based on the input parameters of the three-phase AC power includes:

determining voltage sectors of the three-phase AC power based on the input parameters of the three-phase AC power;

determining a correspondence between three phases of the three-phase AC power and an L phase, an M phase, and an S phase, based on the voltage sectors of the three-phase AC power, wherein in a case where the input parameters include phase voltages of respective phases of the three-phase AC power, an absolute value of the phase voltage of the L phase is the largest among three phase voltages, an absolute value of the phase voltage of the S phase is the smallest among the three phase voltages, and an absolute value of the phase voltage of the M phase is smaller than the absolute value of the phase voltage of the L phase and greater than the absolute value of the phase voltage of the S phase;

determining duty cycles of driving signals for the L phase, the M phase and the S phase, respectively, based on the input parameters of the three-phase AC power; and

determining duty cycles of driving signals for respective phases of the three-phase AC power based on the correspondence between the three phases of the three-phase AC power and the L phase, the M phase, and the S phase and the duty cycles of driving signals for the L phase, the M phase, and the S phase.

In a possible embodiment, determining duty cycles of driving signals for the L phase, the M phase and the S phase respectively based on the input parameters of the three-phase AC power includes:

determining a duty cycle of a driving signal for a target phase which is the M phase or the S phase, based on the input parameters of the three-phase AC power; and

determining a duty cycle of a driving signal for another phase based on the duty cycle of the driving signal for the target phase and a preset duty cycle of a driving signal for the L phase.

In a possible embodiment, the input parameters include phase voltages of respective phases of the three-phase AC power; and
determining a duty cycle of a driving signal for a target phase based on the input parameters of the three-phase AC power includes: determining the duty cycle of the driving signal for the target phase based on the phase voltages of respective phases.

In a possible embodiment, the input parameters include phase voltages and phase currents of respective phases of the three-phase AC power; and
determining a duty cycle of a driving signal for a target phase based on the input parameters of the three-phase AC power includes:

determining a given value of duty cycle based on a ratio of a phase voltage of the target phase to a phase voltage of the L phase;

determining a feedback value of duty cycle based on a ratio of a phase current of the target phase to a phase current of the L phase;

correcting the given value of duty cycle by using the feedback value of duty cycle, to obtain a target value;

and

inputting the target value into a current loop regulator to obtain the duty cycle of the driving signal for the target phase.

In a possible embodiment, the input parameters include phase voltages and phase currents of respective phases of the three-phase AC power; and

determining a duty cycle of a driving signal for a target phase based on the input parameters of the three-phase AC power includes:

determining an initial value of the duty cycle of the driving signal for the target phase based on the phase voltages of respective phases;

determining a given value of duty cycle based on a ratio of a phase voltage of the target phase to a phase voltage of the L phase; determining a feedback value of duty cycle based on a ratio of a phase current of the target phase to a phase current of the L phase; correcting the given value of duty cycle by using the feedback value of duty cycle to obtain a target value; and inputting the target value into a current loop regulator to obtain an adjustment amount of the duty cycle of the driving signal for the target phase; and

correcting the initial value of the duty cycle of the driving signal for the target phase by using the adjustment amount of the duty cycle of the driving signal for the target phase, to obtain the duty cycle of the driving signal for the target phase.

In the above control method, the phase voltages and the phase currents of respective phases of the three-phase AC power are obtained, the initial value and the adjustment amount of the duty cycle of the driving signal for the target phase are calculated, and the initial value of the duty cycle is adjusted by using the adjustment amount, so as to obtain a final duty cycle of the driving signal for the target phase. In this way, the duty cycle is calculated more accurately and a precise control of the THD of the input current is achieved.

In a possible embodiment, the output parameters include an output voltage; and
determining wave-generating parameters of the rectifier circuit based on the output parameters of the rectifier circuit includes:

determining an error value of the output voltage based on the output voltage and a preconfigured reference voltage; and

inputting the error value of the output voltage into a voltage loop regulator to obtain the wave-generating parameters of the rectifier circuit.

In a possible embodiment, the output parameters include an output current; and
determining wave-generating parameters of the rectifier circuit based on the output parameters of the rectifier circuit includes:

determining an error value of the output current based on the output current and a preconfigured reference current; and

inputting the error value of the output current into a current loop regulator to obtain the wave-generating parameters of the rectifier circuit.

In a possible embodiment, the output parameters include an output voltage and an output current; and
determining wave-generating parameters of the rectifier circuit based on the output parameters of the rectifier circuit includes:

determining an error value of the output voltage based on the output voltage and a preconfigured reference voltage; and

inputting the error value of the output voltage into a voltage loop regulator to obtain a reference value of the output current;

determining an error value of the output current based on the output current and the reference value of the output current; and

inputting the error value of the output current into a current loop regulator to obtain the wave-generating parameters of the rectifier circuit.

In the above control method, the output voltage and the output current of the rectifier circuit are obtained, the wave-generating parameters of the rectifier circuit are calculated, and the driving signal of the switch component in the rectifier circuit is generated based on the wave-generating parameters. That is, the state of the switch component in the rectifier circuit is controlled through feedback adjustment, so that the gain of the LLC can be adjusted and a control of the output voltage and the output current of the rectifier circuit is realized.

In a possible embodiment, the wave-generating parameters include a wave-generating frequency and a wave-generating phase shift angle.

In a third aspect, an embodiment of the present disclosure provides a control apparatus for the three-phase single-stage AC-DC converter as provided in the first aspect. The apparatus includes:

an acquisition unit, configured to obtain input parameters of a three-phase AC power and output parameters of a rectifier circuit in real time;

a first processing unit, configured to determine duty cycles of driving signals for respective phases based on the input parameters of the three-phase AC power;

a second processing unit, configured to determine wave-generating parameters of the rectifier circuit based on the output parameters of the rectifier circuit;

a signal generation unit, configured to generate driving signals of respective switch components in a three-phase matrix switching circuit and the rectifier circuit, based on the determined duty cycles of driving signals for respective phases and the wave-generating parameters of the rectifier circuit; and

a driving unit, configured to drive corresponding switch components by using the generated driving signals of respective switch components.

In a possible embodiment, the first processing unit is specifically configured to:

determine voltage sectors of the three-phase AC power based on the input parameters of the three-phase AC power;

determine a correspondence between three phases of the three-phase AC power and an L phase, an M phase, and an S phase, based on the voltage sectors of the three-phase AC power, wherein in a case where the input parameters include phase voltages of respective phases of the three-phase AC power, an absolute value of the phase voltage of the L phase is the largest among three phase voltages, an absolute value of the phase voltage of the S phase is the smallest among the three phase voltages, and an absolute value of the phase voltage of the M phase is smaller than the absolute value of the phase voltage of the L phase and greater than the absolute value of the phase voltage of the S phase;

determine duty cycles of driving signals for the L phase, the M phase and the S phase, respectively, based on the input parameters of the three-phase AC power; and

determine duty cycles of driving signals for respective phases of the three-phase AC power based on the correspondence between the three phases of the three-phase AC power and the L phase, the M phase, and the S phase and the duty cycles of driving signals for the L phase, the M phase, and the S phase.

In a possible embodiment, the first processing unit is specifically configured to:

determine a duty cycle of a driving signal for a target phase which is the M phase or the S phase, based on the input parameters of the three-phase AC power; and

determine a duty cycle of a driving signal for another phase based on the duty cycle of the driving signal for the target phase and a preset duty cycle of a driving signal for the L phase.

In a possible embodiment, the input parameters include phase voltages of respective phases of the three-phase AC power; and
the first processing unit is specifically configured to determine the duty cycle of the driving signal for the target phase based on the phase voltages of respective phases.

In a possible embodiment, the input parameters include phase voltages and phase currents of respective phases of the three-phase AC power; and
the first processing unit is specifically configured to:

determine a given value of duty cycle based on a ratio of a phase voltage of the target phase to a phase voltage of the L phase;

determine a feedback value of duty cycle based on a ratio of a phase current of the target phase to a phase current of the L phase;

correct the given value of duty cycle by using the feedback value of duty cycle, to obtain a target value; and

input the target value into a current loop regulator to obtain the duty cycle of the driving signal for the target phase.

In a possible embodiment, the input parameters include phase voltages and phase currents of respective phases of the three-phase AC power; and
the first processing unit is specifically configured to:

determine an initial value of the duty cycle of the driving signal for the target phase based on the phase voltages of respective phases;

determine a given value of duty cycle based on a ratio of a phase voltage of the target phase to a phase voltage of the L phase; determine a feedback value of duty cycle based on a ratio of a phase current of the target phase to a phase current of the L phase; correct the given value of duty cycle by using the feedback value of duty cycle to obtain a target value; and input the target value into a current loop regulator to obtain an adjustment amount of the duty cycle of the driving signal for the target phase; and

correct the initial value of the duty cycle of the driving signal for the target phase by using the adjustment amount of the duty cycle of the driving signal for the target phase, to obtain the duty cycle of the driving signal for the target phase.

In a possible embodiment, the output parameters include an output voltage; and

the second processing unit is specifically configured to:

determine an error value of the output voltage based on the output voltage and a preconfigured reference voltage; and

input the error value of the output voltage into a voltage loop regulator to obtain the wave-generating parameters of the rectifier circuit.

In a possible embodiment, the output parameters include an output current; and
the second processing unit is specifically configured to:

determine an error value of the output current based on the output current and a preconfigured reference current; and

input the error value of the output current into a current loop regulator to obtain the wave-generating parameters of the rectifier circuit.

In a possible embodiment, the output parameters include an output voltage and an output current; and
the second processing unit is specifically configured to:

determine an error value of the output voltage based on the output voltage and a preconfigured reference voltage; and

input the error value of the output voltage into a voltage loop regulator to obtain a reference value of the output current;

determine an error value of the output current based on the output current and the reference value of the output current; and

input the error value of the output current into a current loop regulator to obtain the wave-generating parameters of the rectifier circuit.

In a possible embodiment, the wave-generating parameters include a wave-generating frequency and a wave-generating phase shift angle.

In a fourth aspect, an embodiment of the present disclosure provides a control apparatus for the three-phase single-stage AC-DC converter as provided in the first aspect. The apparatus includes:

a sampling module, configured to obtain input parameters of a three-phase AC power and output parameters of a rectifier circuit in real time;

a processing module, configured to determine duty cycles of driving signals for respective phases based on the input parameters of the three-phase AC power, and to determine wave-generating parameters of the rectifier circuit based on the output parameters of the rectifier circuit; and

a pulse width modulation (PWM) generation module, configured to generate driving signals of respective switch components in a three-phase matrix switching circuit and the rectifier circuit, based on the determined duty cycles of driving signals for respective phases and the wave-generating parameters of the rectifier circuit, and to drive corresponding switch components by using the generated driving signals of respective switch components.

In a fifth aspect, an embodiment of the present disclosure provides an electronic device. The device includes a processor and a memory for storing a program executable by the processor. The processor is configured to read the program in the memory and perform the method as described in any of the embodiments in the second aspect.

In a sixth aspect, an embodiment of the present disclosure further provides a computer storage medium on which a computer program is stored. The computer program, when executed by a processor, causes the processor to implement the method as described in the second aspect.

In a seventh aspect, the present disclosure provides a computer program product. The computer program product includes a computer program code which, when executed on a computer, causes the computer to perform the method as described in any of the embodiments in the second aspect.

For technical effects that can be achieved in each of the third aspect, the fourth aspect, the fifth aspect, the sixth aspect and the seventh aspect, reference may be made to the above description of the technical effects that can be achieved by possible embodiments in the second aspect, which is not repeated.

## BRIEF DESCRIPTION OF THE DRAWINGS

For clearer illustration of the technical solutions according to embodiments of the present disclosure, hereinafter briefly described are the drawings to be applied in embodiments of the present disclosure. Apparently, the drawings in the following descriptions are only some embodiments of the present disclosure, and other drawings may be obtained by those skilled in the art based on the provided drawings without any creative effort.

Figure 1 is a schematic structural diagram of a conventional AC-DC converter in the related art;

Figure 2 is a schematic structural diagram of a three-phase single-stage AC-DC converter according to an embodiment of the present disclosure;

Figure 3 is a schematic flow chart of a control method for a three-phase single-stage AC-DC converter according to an embodiment of the present disclosure;

Figure 4 is a schematic diagram of an L phase, an M phase, and an S phase according to an embodiment of the present disclosure;

Figure 5 is a schematic diagram showing a principle for determining a duty cycle of a driving signal for a target phase according to an embodiment of the present disclosure;

Figure 6 is a schematic diagram showing a principle for determining a duty cycle of a driving signal for a target phase according to another embodiment of the present disclosure;

Figure 7 is a schematic diagram showing a principle for determining a duty cycle of a driving signal for a target phase according to yet another embodiment of the present disclosure;

Figure 8 is a schematic diagram showing a principle for determining a duty cycle of a driving signal for a target phase according to yet another embodiment of the present disclosure;

Figure 9 is a schematic diagram showing a principle for determining a duty cycle of a driving signal for a target phase according to yet another embodiment of the present disclosure;

Figure 10 is a schematic diagram showing a principle for determining a duty cycle of a driving signal for a target phase according to a further embodiment of the present disclosure;

Figure 11 is a schematic diagram showing a principle for determining wave-generating parameters of a rectifier circuit according to an embodiment of the present disclosure;

Figure 12 is a schematic diagram showing a principle for determining wave-generating parameters of a rectifier circuit according to another embodiment of the present disclosure;

Figure 13 is a schematic diagram showing a principle for determining wave-generating parameters of a rectifier circuit according to yet another embodiment of the present disclosure;

Figure 14 is a schematic flow chart of a specific implementation of a control method for a three-phase single-stage AC-DC converter according to an embodiment of the present disclosure;

Figure 15 is a schematic diagram showing a principle of a control method for a three-phase single-stage AC-DC converter according to an embodiment of the present disclosure;

Figure 16 is a schematic diagram showing a principle of a control method for a three-phase single-stage AC-DC converter according to another embodiment of the present disclosure;

Figure 17 is a schematic diagram of driving signals of switch components in a three-phase matrix switching circuit according to an embodiment of the present disclosure;

Figure 18 is a schematic diagram of driving signals of switch components in a rectifier circuit according to an embodiment of the present disclosure;

Figure 19 is a schematic diagram of a switching state of a switch component of an upper bridge arm of A-phase according to an embodiment of the present disclosure;

Figure 20 is a schematic diagram of a switching state of a switch component of an upper bridge arm of B-phase according to an embodiment of the present disclosure;

Figure 21 is a schematic diagram of a switching state of a switch component of an upper bridge arm of C-phase according to an embodiment of the present disclosure;

Figure 22 is a waveform diagram of input and output voltage and current according to an embodiment of the present disclosure;

Figure 23 is a schematic diagram of Fourier analysis of an input current according to an embodiment of the present disclosure;

Figure 24 is a waveform diagram of input and output voltage and current according to another embodiment of the present disclosure;

Figure 25 is a schematic diagram of Fourier analysis of an input current according to another embodiment of the present disclosure;

Figure 26 is a schematic structural diagram of a control apparatus for a three-phase single-stage AC-DC converter according to an embodiment of the present disclosure;

Figure 27 is a schematic structural diagram of a control apparatus for a three-phase single-stage AC-DC converter according to another embodiment of the present disclosure; and

Figure 28 is a schematic structural diagram of an electronic device according to an embodiment of the present disclosure.

**DETAILED DESCRIPTION**

In order to make the objectives, technical solutions and advantages of the present disclosure clearer, the disclosure is described in further detail below in conjunction with the accompanying drawings. Apparently, the described embodiments are only some of, rather than all, the embodiments of the present disclosure. Any other embodiments obtained by those of ordinary skills in the art based on the embodiments of the present disclosure, without any creative effort, shall fall within the protection scope of the present disclosure.

In the description of the embodiments of the present disclosure, unless otherwise stated, "/" means OR, for example, A/B refers to A or B. in addition, "and/or" is merely an association describing associated objects and means that there may be three relationships. For example, A and/or B may indicate that A exists alone, both A and B exist, or B exists alone. In addition, in the description of the embodiment of the present disclosure, the plural form means two or more.

In the following description, terms "first", "second", and the like, are for descriptive purposes only and cannot be understood as indicating or implying relative importance or implicitly indicating quantities of indicated technical features. Therefore, a feature defined with "first" or "second" may explicitly or implicitly include one or more such feature.

Before introducing the three-phase single-stage AC-DC converter and the control scheme therefor provided by the embodiments of the present disclosure, for the sake of easy understanding, the technical background of the embodiments of the present disclosure is firstly introduced in detail.

A conventional AC-DC converter, as shown in Figure 1, usually has a two-stage topology including a PFC circuit and a DC-DC conversion circuit. The front-stage PFC circuit is for controlling an input current to achieve a high PF and a low THD. The rear-stage DC-DC conversion circuit is for controlling an output voltage and an output current to ensure a stability of the output voltage and the output current under different operating conditions.

However, the two-stage topology requires two-stage switching devices and an intermediate bus capacitor $C_{bus}$, which limits a conversion efficiency and a power density of the converter to a certain extent.

In view of this, a three-phase single-stage AC-DC converter and a control method and a control apparatus therefor, a device, a medium and a program product are provided in embodiments of the present disclosure. Compared with the conventional AC-DC converter, the three-phase single-stage AC-DC converter provided in the present disclosure only needs a one-stage switching network and does not need an intermediate bus capacitor, thereby having an improved conversion efficiency and an improved power density.

In addition, given that the three-phase single-stage AC-DC converter has only a one-stage switching network, if it is required to achieve the control of the input current THD and PF, to achieve the control of the output voltage and the input current, and to achieve improved efficiency of soft-turn on of switch components in the entire network, it is difficult to simultaneously meet these three control requirements in the conventional technology. In the conventional control method, control of the input current is usually realized through pulse width modulation, and control of the output voltage and the output current is usually realized through phase shifting. With such control method, a gain of LLC is too large in a case of a high input voltage and a low output voltage, and it is necessary to increase a phase shift angle to reduce the gain of the LLC. However, an excessively large phase shift angle may easily cause the LLC to lose soft-turn on condition, and an efficiency of the converter may be reduced. Therefore, such control method is limited in application scenarios with a wide range of the input and output voltages.

Therefore, a control method for a three-phase single-stage AC-DC converter is provided in the embodiment of the present disclosure. On one hand, input parameters of the three-phase AC power are obtained in real time, the duty cycles of driving signals for respective phases are determined based on the obtained input parameters, and the driving signals are generated based on the duty cycles of driving signals for respective phases so as to control switch components of corresponding switch branches. In this way, control of an input current of the three-phase AC power is realized. On the other hand, output parameters of the rectifier circuit are obtained, and the wave-generating parameters of the rectifier circuit are determined based on the output parameters of the rectifier circuit. Driving signals are generated based on the wave-generating parameters, so as to control corresponding switch components in the rectifier circuit. In this way, control of an output voltage and an output current is realized.

The input current, the output voltage and the output current are controlled, so that the three-phase single-stage AC-DC converter has a strong harmonic suppression capability and the THD of the input current is small. Also, all switch components are enabled to be soft-turned on. Therefore, the efficiency of the three-phase single-stage AC-DC converter is improved.

The input current, the output voltage and the output current are controlled, so that the three-phase single-stage AC-DC converter has a strong harmonic suppression capability and the THD of the input current is small. Besides, all switch components are enabled to be soft-turned on. Therefore, the efficiency of the three-phase single-stage AC-DC converter is improved.

After introducing the technical background of the embodiment of the present disclosure, the three-phase single-stage AC-DC converter provided in an embodiment of the present disclosure is described in detail below in conjunction with specific embodiments.

Reference is made to Figure 2, which is a schematic structural diagram of a three-phase single-stage AC-DC converter according to an embodiment of the present disclosure. The three-phase single-stage AC-DC converter includes a three-phase matrix switching circuit 21, a resonant circuit 22, an isolation circuit 23, and a rectifier circuit 24.

The three-phase matrix switching circuit 21 is connected to a three-phase AC power and includes three independent switch branches. Each of the switch branches includes an upper bridge arm and a lower bridge arm. An intermediate point between the upper bridge arm and the lower bridge arm in each of the switch branches is connected to a phase of AC input. Each bridge arm includes one bidirectional switch component or two switch components connected in series in reverse. The switch component may be a metal-oxide-semiconductor field-effect transistor (MOSFET, or MOS for short) switch component including an anti-parallel diode.

The resonant circuit 22 includes a resonant capacitor $C_r$, a resonant inductor $L_r1$ and an excitation inductor $L_r2$ which are connected in series between a common endpoint of upper bridge arms of the three switch branches and a common endpoint of lower bridge arms of the three switch branches.

A side of the isolation circuit 23 is connected to the resonant circuit 22 and another side thereof is connected to the rectifier circuit 24.

The rectifier circuit 24 includes at least two switch components. An input side of the rectifier circuit is connected to the isolation circuit 23, and an output side of the rectifier circuit is connected to a load device. Apparently, the output side of the rectifier circuit 24 may be connected to a DC power supply. The switch component may be an MOS switch component including an anti-parallel diode.

In a possible embodiment, the converter further includes a three-phase filter circuit 25 connected between the three-phase AC power and the three-phase matrix switching circuit 21. The three-phase filter circuit includes three filter branches, and each of the filter branches is connected to a phase of AC input.

It should be noted that filter capacitors may be provided in a delta connection or star connection, which is not limited in the embodiment of the present disclosure.

In a possible embodiment, the converter further includes a filter capacitor $C_o$ connected between the rectifier circuit 24 and the load device, and the filter capacitor is configured to filter an output of the rectifier circuit 24.

In a possible embodiment, the rectifier circuit 24 includes a full-bridge rectifier circuit and a half-bridge rectifier circuit. The rectifier circuit shown in Figure 2 is a full-bridge rectifier circuit and includes four switch components. In practical applications, the rectifier circuit may be implemented as a half-bridge rectifier circuit including two switch components.

In a possible embodiment, the isolation circuit 23 includes a transformer. A primary side of the transformer is connected in parallel with the excitation inductor $L_r2$, and a secondary side of the transformer is connected to the rectifier circuit 24. The transformer may be implemented as a high-frequency isolation transformer.

It should be noted that the excitation inductor in the resonant circuit 22 may be an excitation inductor provided separately, or it is possible to reuse the excitation inductor in the transformer, which is not limited in the embodiment of the present disclosure.

After introducing the three-phase single-stage AC-DC converter provided in the embodiment of the present disclosure, the control method for the three-phase single-stage AC-DC converter provided in an embodiment of the present disclosure will be described in detail below in conjunction with specific embodiments.

It should be noted that the control method for the three-phase single-stage AC-DC converter provided in the embodiment of the present disclosure is not only applicable to the three-phase single-stage AC-DC converter provided in the above embodiment of the present disclosure, but also applicable to other three-phase single-stage AC-DC converter including a full-bridge LLC resonant network. The AC-DC converter may be a voltage-type converter or a current-type converter.

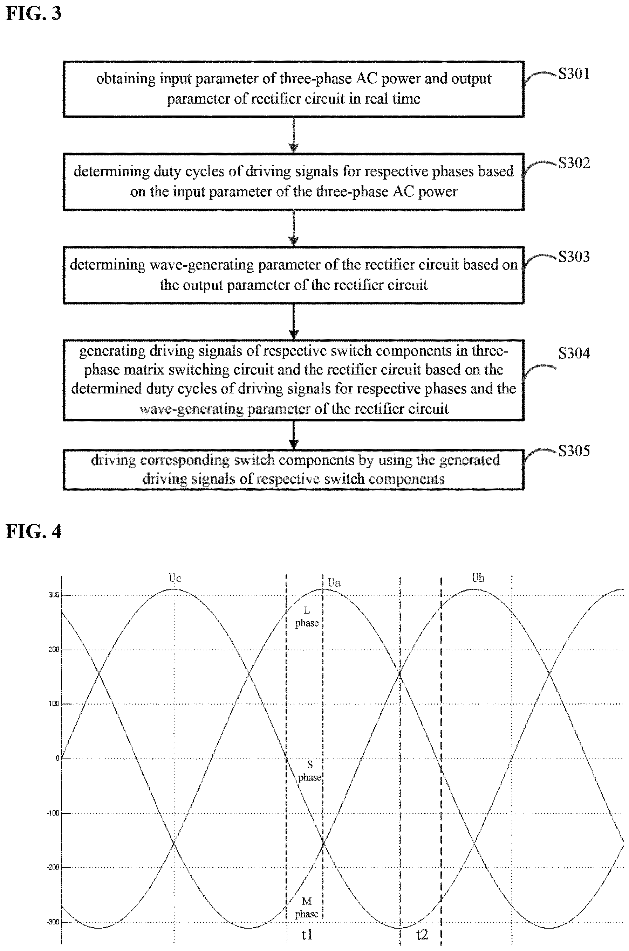

Reference is made to Figure 3, which is a flow chart of a control method for a three-phase single-stage AC-DC converter according to an embodiment of the present disclosure. An implementation of the method includes steps S301 to S305.

In S301, input parameters of a three-phase AC power and output parameters of a rectifier circuit are obtained in real time.

In a specific implementation, the input parameters of the three-phase AC power may include only phase voltages of respective phases of the three-phase AC power, or may include both phase voltages of respective phases of the three-phase AC power and phase currents of respective phases of the three-phase AC power.

When the input parameters include the phase voltages of respective phases of the three-phase AC power, in obtaining the phase voltages of respective phases of the three-phase AC power, three line voltages of the three-phase AC power input may be sampled separately and then converted into phase voltages. Alternatively, two of the line voltages of the three-phase AC power input may be sampled and converted into phase voltages, and then the phase voltage of the third phase is calculated by using the obtained two phase voltages. The method of obtaining the phase voltages is not limited in the embodiment of the present disclosure.

Similarly, when the input parameters include the phase currents of respective phases of the three-phase AC power, in obtaining the phase currents of respective phases of the three-phase AC power, three line currents of the three-phase AC power input may be sampled separately. Alternatively, two of the line currents of the three-phase AC power input may be sampled and then the phase current of the third phase may be calculated. The method of obtaining the phase currents is not limited in the embodiment of the present disclosure.

It should be noted that the output parameters of the rectifier circuit may include only the output voltage of the rectifier circuit, or may include only the output current of the rectifier circuit, or may include both the output voltage of the rectifier circuit and the output current of the rectifier circuit.

To obtain the output voltage of the rectifier circuit, the output side of the rectifier circuit may be sampled. To obtain the output current of the rectifier circuit, a sampling point for the output current may be set after the filter capacitor $C_o$, or may be set between the filter capacitor $C_o$ and the rectifier circuit. Also, a resonant current may be sampled, or a current of switch component of a rectifier bridge on the secondary side of the transformer may be sampled, or a current of three-phase switch component on the primary side of the transformer may be sampled. Also, a differential voltage of the resonant capacitor may be sampled and then a current of the resonant capacitor may be calculated through the following equation (1). Since the resonant capacitor and the resonant inductor are in the same current loop, their currents are equal. After the current of the resonant capacitor is calculated, the resonant current can be obtained as $i_{Lr} = i_{cr}$. The current obtained by sampling in the above manner may be equivalent to the output current to a certain extent. A method of sampling the output current is not specifically limited in the embodiment of the present disclosure.

$$i_{cr} = C \frac{du}{dt} \qquad (1)$$

In S302, duty cycles of driving signals for respective phases are determined based on the input parameters of the three-phase AC power.

In an implementation, determining duty cycles of driving signals for respective phases based on the input parameters of the three-phase AC power includes: determining voltage sectors of the three-phase AC power based on the input parameters of the three-phase AC power, and determining a correspondence between three phases of the three-phase AC power and an L phase, an M phase, and an S phase, based on the voltage sectors of the three-phase AC power. In a case where the input parameters include phase voltages of respective phases of the three-phase AC power, an absolute value of the phase voltage of the L phase is the largest among three phase voltages, an absolute value of the phase voltage of the S phase is the smallest among the three phase voltages, and an absolute value of the phase voltage of the M phase is smaller than the absolute value of the phase voltage of the L phase and greater than the absolute value of the phase voltage of the S phase.

It is assumed that the three phases of the three-phase AC power are A phase, B phase, and C phase. In the embodiment, the L phase refers to a phase corresponding to the largest absolute value of a phase voltage among the three phase voltages, the S phase refers to a phase corresponding to the smallest absolute value of a phase voltage among the three phase voltages, and the M phase refers to a phase corresponding to an absolute value of a phase voltage less than the absolute value of the L-phase voltage and greater than the absolute value of the S-phase voltage, among the three phase voltages. By determining the voltage sectors of the three-phase AC power, the correspondence between the three phases of the three-phase AC power and the L phase, the M phase, and the S phase can be determined. Specifically, determining the voltage sectors based on the phase voltages of the three phases may be implemented by existing methods, and is not limited in the embodiment of the present disclosure.

The L phase, the M phase, and the S phase are changing with the AC cycle of the three-phase AC power. In other words, the correspondence between the A, B, and C phases and the L, M, and S phases changes periodically. In an example, as shown in Figure 4, during the t1 time period, the A phase corresponds to the L phase, the C phase corresponds to the S phase, and the B phase corresponds to the M phase. During the t2 time period, the C phase corresponds to the L phase, the A phase corresponds to the S phase, and the B phase corresponds to the M phase.

After the correspondence between the three phases of the three-phase AC power and the L phase, the M phase, and the S phase is determined, duty cycles of driving signals for the L phase, the M phase, and the S phase may be determined based on the input parameters of the three-phase AC power. Then, duty cycles of driving signals of respective phases of the three-phase AC power are determined based on the correspondence between three phases of the three-phase AC power and the L phase, the M phase, and the S phase and the duty cycles of driving signals for the L phase, the M phase, and the S phase.

In an implementation, a process of determining duty cycles of driving signals for the L phase, the M phase, and the S phase based on the input parameters of the three-phase AC power may include: determining a duty cycle of a driving signal for a target phase based on the input parameters of the three-phase AC power, and determining a duty cycle of a driving signal for another phase based on the duty cycle of the driving signal for the target phase and a preset duty cycle of the driving signal for the L phase. Here, the target phase is the M phase or the S phase, and the preset duty cycle of the driving signal for the L phase may be any value greater than 0 and less than or equal to 0.5. For example, the preset duty cycle of the driving signal for the L phase is 0.5, 0.45, or 0.1.

In a specific implementation, a duty cycle of a driving signal for another phase is determined based on the duty cycle of the driving signal for the target phase and a preset duty cycle of the driving signal for the L phase. If the target phase is the M phase, then the other phase is the S phase, and the duty cycle of the driving signal for the S phase is equal to a difference between the preset duty cycle of the driving signal for the L phase and the duty cycle of the driving signal for the M phase. If the target phase is the S phase, then the other phase is the M phase, and the duty cycle of the driving signal for the M phase is equal to a difference between the preset duty cycle of the driving signal for the L phase and the duty cycle of the driving signal for the S phase.

In practical applications, determining the duty cycle of the driving signal for the target phase based on the input parameters of the three-phase AC power may include, but is not limited to, the following implementations depending on the input parameters.

In a first embodiment, the input parameters include phase voltages of respective phases of the three-phase AC power.

In this embodiment, the duty cycle of the driving signal for the target phase is determined based on the phase voltages of respective phases of the three-phase AC power.

For example, the target phase is the M phase, and determining a duty cycle of the driving signal for the M phase based on the phase voltages of respective phases may be implemented through calculation of $K*VM/(VM+VS)$ or $K*VM/VL$. Alternatively, the determination may be implemented by existing methods, which is not limited in the embodiment of the present disclosure. Here, K represents a preset constant, VM represents a phase voltage of the M phase, VS represents a phase voltage of the S phase, VL represents a phase voltage of the L phase, and $VL=VM+VS$.

Similarly, when the target phase is the S phase, determining a duty cycle of the driving signal for the M phase based on the phase voltages of respective phases may be implemented through calculation of $K*VS/(VM+VS)$ or $K*VS/VL$. Alternatively, the determination may be implemented by existing methods, which is not limited in the embodiment of the present disclosure. Here, K represents a preset constant, VM represents a phase voltage of the M phase, VS represents a phase voltage of the S phase, VL represents a phase voltage of the L phase, and $VL=VM+VS$.

In a second embodiment, the input parameters include phase voltages and phase currents of respective phases of the three-phase AC power.

In this embodiment, determining the duty cycle of the driving signal for the target phase based on the phase voltages and the phase currents of respective phases of the three-phase AC power may include the following two cases.

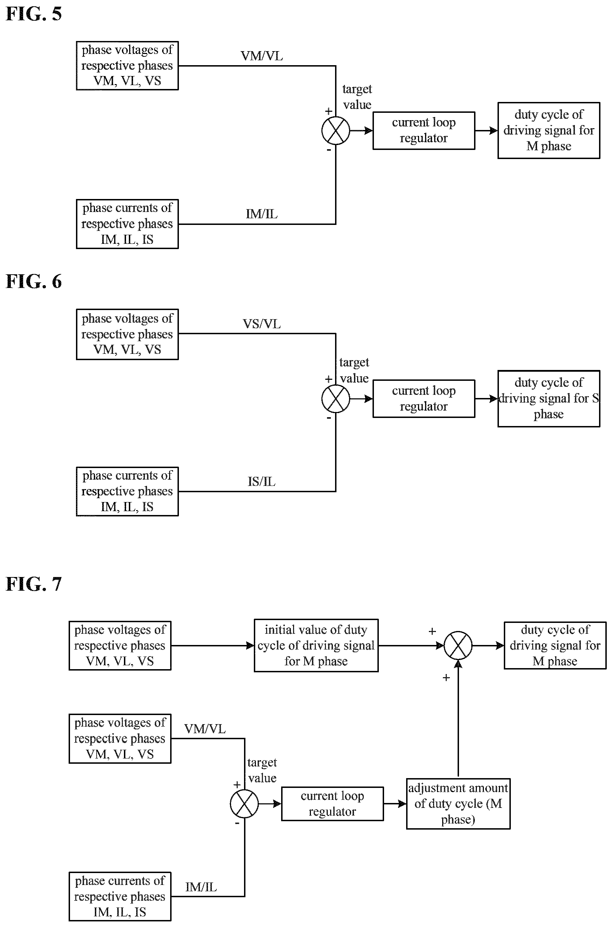

In a first case, as shown in Figure 5, the target phase is the M phase, and determining the duty cycle of the driving signal for the M phase based on the phase voltages and the phase currents of respective phases of the three-phase AC power includes: determining a given value of duty cycle based on a ratio of a phase voltage of the M phase to a phase voltage of the L phase; determining a feedback value of duty cycle based on a ratio of a phase current of the M phase to a phase current of the L phase; correcting the given value of duty cycle by using the feedback value of duty cycle, (that is, calculating a difference between the given value of duty cycle and the feedback value of duty cycle), to obtain a target value; and inputting the target value into a current loop regulator to obtain the duty cycle of the driving signal for the M phase.

It should be noted that the current loop regulator mentioned in the embodiment of the present disclosure may be a proportional integral (PI) regulator, a proportional integral derivative (PID) regulator, or other general regulators. The current loop regulator and the voltage loop regulator mentioned below in the present disclosure may be implemented by any of the above-mentioned regulators, and are not explained in detail.

As shown in Figure 6, the target phase is the S phase, and determining the duty cycle of the driving signal for the S phase based on the phase voltages and the phase currents of respective phases of the three-phase AC power includes: determining a given value of duty cycle based on a ratio of a phase voltage of the S phase to a phase voltage of the L phase; determining a feedback value of duty cycle based on a ratio of a phase current of the S phase to a phase current of the L phase; correcting the given value of duty cycle by using the feedback value of duty cycle, (that is, calculating a difference between the given value of duty cycle and the feedback value of duty cycle), to obtain a target value; and inputting the target value into a current loop regulator to obtain the duty cycle of the driving signal for the S phase.

In a second case, an initial value of the duty cycle of the driving signal for the target phase is determined based on the phase voltages of respective phases; a given value of duty cycle is determined based on a ratio of a phase voltage of the target phase to a phase voltage of the L phase; a feedback value of duty cycle is determined based on a ratio of a phase current of the target phase to a phase current of the L phase; the given value of duty cycle is corrected by using the feedback value of duty cycle to obtain a target value; the target value is inputted into a current loop regulator to obtain an adjustment amount of the duty cycle of the driving signal for the target phase; and finally the initial value of the duty cycle of the driving signal for the target phase is corrected by using the adjustment amount of the duty cycle of the driving signal for the target phase to obtain the duty cycle of the driving signal for the target phase.

In this case, depending on different target phases used in calculating the adjustment amount of the duty cycle and the initial value of the duty cycle, there may be the following four combinations.

(1) The initial value of the duty cycle corresponds to the M phase, and the adjustment amount of the duty cycle corresponds to the M phase.

As shown in Figure 7, the initial value of the duty cycle of the driving signal for the M phase is determined based on the phase voltages of respective phases; a given value of duty cycle is determined based on a ratio of a phase voltage of the M phase to a phase voltage of the L phase; a feedback value of duty cycle is determined based on a ratio of a phase current of the M phase to a phase current of the L phase; the given value of duty cycle is corrected by using the feedback value of duty cycle, (that is, a difference between the given value of duty cycle and the feedback value of duty cycle is calculated), to obtain a target value; the target value is inputted into a current loop regulator to obtain an adjustment amount of the duty cycle of the driving signal for the M phase; and finally the initial value of the duty cycle of the driving signal for the M phase is corrected by using the adjustment amount of the duty cycle of the driving signal for the M phase, (that is, a sum of the initial value of the duty cycle and the adjustment amount of the duty cycle is calculated), to obtain the duty cycle of the driving signal for the M phase.

(2) The initial value of the duty cycle corresponds to the M phase, and the adjustment amount of the duty cycle corresponds to the S phase.

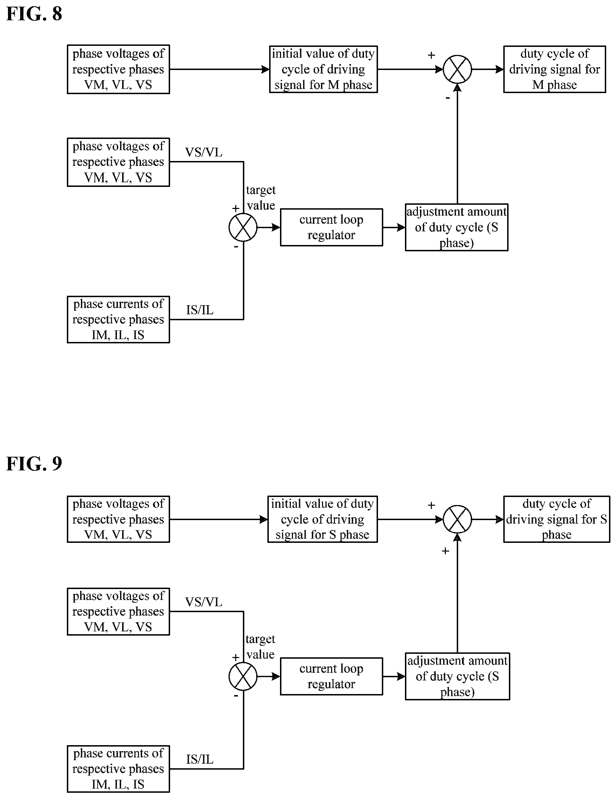

As shown in Figure 8, the initial value of the duty cycle of the driving signal for the M phase is determined based on the phase voltages of respective phases; a given value of duty cycle is determined based on a ratio of a phase voltage of the S phase to a phase voltage of the L phase; a feedback value of duty cycle is determined based on a ratio of a phase current of the S phase to a phase current of the L phase; the given value of duty cycle is corrected by using the feedback value of duty cycle, (that is, a difference between the given value of duty cycle and the feedback value of duty cycle is calculated), to obtain a target value; the target value is inputted into a current loop regulator to obtain an adjustment amount of the duty cycle of the driving signal for the S phase; and finally the initial value of the duty cycle of the driving signal for the M phase is corrected by using the adjustment amount of the duty cycle of the driving signal for the S phase, (that is, a difference between the initial value of the duty cycle and the adjustment amount of the duty cycle is calculated), to obtain the duty cycle of the driving signal for the M phase.

(3) The initial value of the duty cycle corresponds to the S phase, and the adjustment amount of the duty cycle corresponds to the S phase.

As shown in Figure 9, the initial value of the duty cycle of a driving signal for the S phase is determined based on the phase voltages of respective phases; a given value of duty cycle is determined based on a ratio of a phase voltage of the S phase to a phase voltage of the L phase; a feedback value of duty cycle is determined based on a ratio of a phase current of the S phase to a phase current of the L phase; the given value of duty cycle is corrected by using the feedback value of duty cycle, (that is, a difference between the given value of duty cycle and the feedback value of duty cycle is calculated), to obtain a target value; the target value is inputted into a current loop regulator to obtain an adjustment amount of the duty cycle of the driving signal for the S phase; and finally the initial value of the duty cycle of the driving signal for the S phase is corrected by using the adjustment amount of the duty cycle of the driving signal for the S phase, (that is, a sum of the initial value of the duty cycle and the adjustment amount of the duty cycle is calculated), to obtain the duty cycle of the driving signal for the S phase.

(4) The initial value of the duty cycle corresponds to the S phase, and the adjustment amount of the duty cycle corresponds to the M phase.

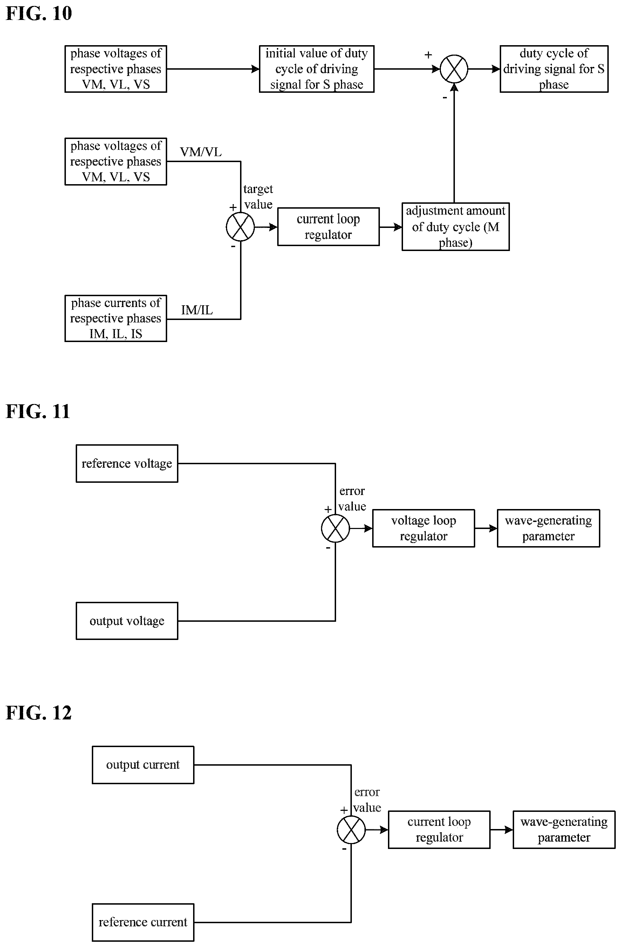

As shown in Figure 10, the initial value of the duty cycle of the driving signal for the S phase is determined based on the phase voltages of respective phases; a given value of duty cycle is determined based on a ratio of a phase voltage of the M phase to a phase voltage of the L phase; a feedback value of duty cycle is determined based on a ratio of a phase current of the M phase to a phase current of the L phase; and the given value of duty cycle is corrected by using the feedback value of duty cycle, (that is, a difference between the given value of duty cycle and the feedback value of duty cycle is calculated), to obtain a target value; the target value is inputted into a current loop regulator to obtain an adjustment amount of the duty cycle of the driving signal for the M phase; and finally the initial value of the duty cycle of the driving signal for the S phase is corrected by using the adjustment amount of the duty cycle of the driving signal for the M phase, (that is, a difference between the initial value of the duty cycle and the adjustment amount of the duty cycle is calculated), to obtain the duty cycle of the driving signal for the S phase.

In the above four cases, the method of determining the initial value of the duty cycle of the driving signal for the target phase (the M phase or S phase) based on the phase voltages of respective phases is the same as the method of determining the initial value of the duty cycle of the driving signal for the target phase based on phase voltages of respective phases of the three-phase AC power in the first embodiment, and is not described in detail here.

In S303, wave-generating parameters of the rectifier circuit are determined based on the output parameters of the rectifier circuit.

In a specific implementation, the wave-generating parameters of the rectifier circuit may be a wave-generating frequency or a wave-generating phase shift angle, which is not limited in the embodiment of the present disclosure. When determining the wave-generating parameters of the rectifier circuit based on the output parameters of the rectifier circuit, there may be different implementations depending on different output parameters acquired.

In a first embodiment, the output parameters include an output voltage.

In this implementation, as shown in Figure 11, when determining the wave-generating parameters of the rectifier circuit based on the output parameters of the rectifier circuit, an error value of the output voltage is determined based on the output voltage and a preconfigured reference voltage, and then the error value of the output voltage is inputted into a voltage loop regulator to obtain the wave-generating parameters of the rectifier circuit. The preconfigured reference voltage may be an expected voltage value. For example, the expected voltage value is 48V, and the preconfigured reference voltage is 48V.

In a second embodiment, the output parameters include an output current.

In this implementation, as shown in Figure 12, when determining the wave-generating parameters of the rectifier circuit based on the output parameters of the rectifier circuit, an error value of the output current is determined based on the output current and a preconfigured reference current, and then the error value of the output current is inputted into a current loop regulator to obtain the wave-generating parameters of the rectifier circuit. The preconfigured reference current may be an expected current value. For example, the expected current value is 16A, and the preconfigured reference current is 16A.

In a third embodiment, the output parameters include an output voltage and an output current.

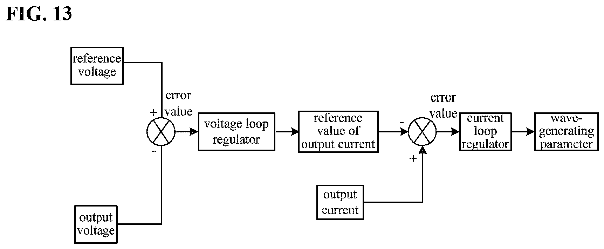

In this implementation, as shown in Figure 13, when determining the wave-generating parameters of the rectifier circuit based on the output parameters of the rectifier circuit, an error value of the output voltage is determined based on the output voltage and a preconfigured reference voltage, the error value of the output voltage is inputted into a voltage loop regulator to obtain a reference value of the output current, an error value of the output current is determined based on the output current and the reference value of the output current, and the error value of the output current is inputted into a current loop regulator to obtain the wave-generating parameters of the rectifier circuit.

In S304, driving signals of respective switch components in the three-phase matrix switching circuit and the rectifier circuit are generated based on the determined duty cycles of driving signals for respective phases and the wave-generating parameters of the rectifier circuit.

In a specific implementation, when generating the driving signals of switch components in the three-phase matrix switching circuit and the rectifier circuit based on the determined duty cycles of driving signals for respective phases and the wave-generating parameters of the rectifier circuit, a single-chip microcomputer, a digital signal processing (DSP) chip or a Field Programmable Gate Array (FPGA) chip may be utilized and existing methods of generating driving signals may be performed, which are not limited in the embodiment of the present disclosure.

In S305, the corresponding switch components are driven by using the generated driving signals of respective switch components.

In a specific implementation, after generating the driving signals of respective switch components in the three-phase matrix switching circuit and the rectifier circuit, the corresponding switch components may be driven by the generated driving signals of respective switch components. In this way, a control of the input current, the output voltage and the output current is achieved, and soft-turn on of the respective switch components is realized.

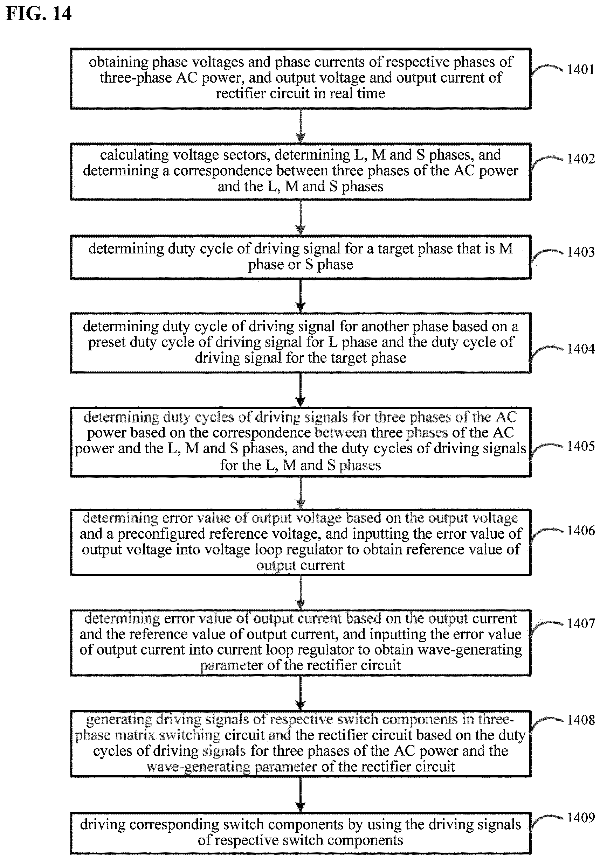

After introducing the control method for the three-phase single-stage AC-DC converter provided in the embodiment of the present disclosure, specific implementations of the control method for the three-phase single-stage AC-DC converter provided in the embodiment of the present disclosure will be described in detail below in conjunction with Figure 14.

As shown in Figure 14, a flow of a specific implementation of a control method for a three-phase single-stage AC-DC converter according to an embodiment of the present disclosure includes steps 1401 to 1409.

In step 1401, phase voltages and phase currents of respective phases of the three-phase AC power, and an output voltage and an output current of the rectifier circuit are obtained in real time.

In step 1402, voltage sectors are determined, an L phase, an M phase, and an S phase are determined, and a correspondence between three phases of the three-phase AC power and the L phase, the M phase, and the S phase is determined.

In step 1403, a duty cycle of a driving signal for a target phase is determined, wherein the target phase is the M phase or the S phase.

In step 1404, a duty cycle of a driving signal for another phase is determined based on a preset duty cycle of the driving signal for the L phase and the duty cycle of the driving signal for the target phase.

In step 1405, duty cycles of driving signals for three phases of the AC power are determined based on the correspondence between three phases of the AC power and the L phase, the M phase, and the S phase, and the duty cycles of driving signals for the L phase, the M phase, and the S phase.

In step 1406, an error value of the output voltage is determined based on the output voltage and a preconfigured reference voltage, and the error value of the output voltage is inputted into a voltage loop regulator to obtain a reference value of the output current.

In step 1407, an error value of the output current is determined based on the output current and the reference value of the output current, and the error value of the output current is inputted into a current loop regulator to obtain the wave-generating parameters of the rectifier circuit.

In step 1408, driving signals of respective switch components in the three-phase matrix switching circuit and the rectifier circuit are generated based on the duty cycles of driving signals for three phases of the AC power and the wave-generating parameters of the rectifier circuit.

In step 1409, corresponding switch components are driven by using the driving signals of the respective switch components.

It should be noted that steps 1402 to 1405 may be performed prior to steps 1406 to 1407, or steps 1406 to 1407 may be performed prior to steps 1402 to 1405, or steps 1402 to 1405 may be performed in parallel with steps 1406 to 1407.

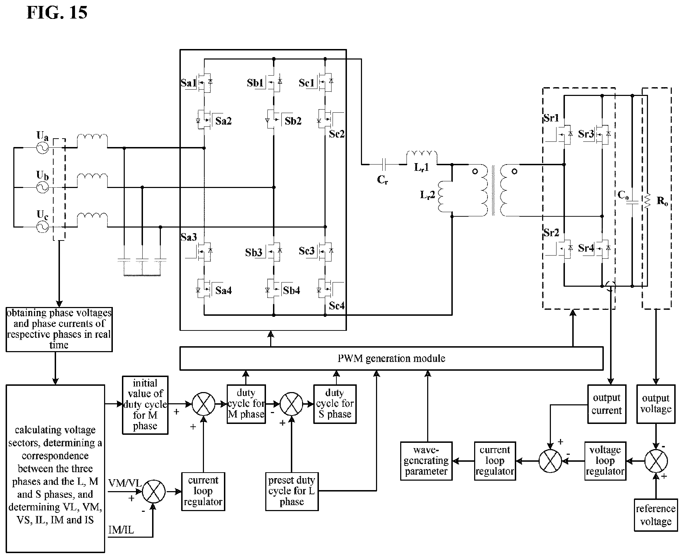

The control method for the three-phase single-stage AC-DC converter provided by the embodiment of the present disclosure will be described below by taking a voltage-type converter as an example with reference to Figure 15.

As shown in Figure 15, in the control method for the three-phase single-stage AC-DC converter provided by the embodiment of the present disclosure, on the AC input side, phase voltages and phase currents of respective phases of the three-phase AC power are obtained in real time, voltage sectors are calculated, a correspondence between the three phases of the AC power and an L phase, an M phase, and an S phase is determined, and VL, VM, VS, IL, IM, and IS are determined. Here, the L phase refers to a phase corresponding to the largest absolute value of a phase voltage among the three phase voltages, the S phase refers to a phase corresponding to the smallest absolute value of a phase voltage among the three phase voltages, and the M phase refers to a phase corresponding to an absolute value of a phase voltage less than the absolute value of the L-phase voltage and greater than the absolute value of the S-phase voltage, among the three phase voltages.

An initial value of the duty cycle of the driving signal for the M phase is determined based on VL, VM, and VS. A given value of duty cycle is determined based on a ratio of a phase voltage of the M phase to a phase voltage of the L phase. A feedback value of duty cycle is determined based on a ratio of a phase current of the M phase to a phase current of the L phase. The given value of duty cycle is corrected by using the feedback value of duty cycle, (that is, a difference between the given value of duty cycle and the feedback value of duty cycle is calculated), to obtain a target value. The target value is inputted into a current loop regulator to obtain an adjustment amount of the duty cycle of the driving signal for the M phase. Finally the initial value of the duty cycle of the driving signal for the M phase is corrected by using the adjustment amount of the duty cycle of the driving signal for the M phase, (that is, a sum of the initial value of the duty cycle and the adjustment amount of the duty cycle is calculated), to obtain the duty cycle of the driving signal for the M phase.

After determining the duty cycle of the driving signal of the M phase, a difference between the preset duty cycle of the driving signal for the L phase and the duty cycle of the driving signal for the M phase is calculated to obtain a duty cycle of the driving signal for the S phase. After the duty cycle of the driving signal for the L phase, the duty cycle of the driving signal for the S phase and the duty cycle of the driving signal for the M phase are obtained, duty cycles for three phases of the AC power are determined based on the correspondence between the three phases of the AC power and the L phase, the M phase, and the S phase.

On the output side of the rectifier circuit, an output voltage and an output current of the rectifier circuit are obtained in real time, an error value of the output voltage is determined based on the output voltage and a preconfigured reference voltage, the error value of the output voltage is inputted into a voltage loop regulator to obtain a reference value of the output current, an error value of the output current is determined based on the output current and the reference value of the output current, and the error value of the output current is inputted into a current loop regulator to obtain the wave-generating parameters of the rectifier circuit.

After the duty cycles of driving signals for the three phases of the AC power and the wave-generating parameters of the rectifier circuit are obtained through calculation, the duty cycles of driving signals for the three phases of the AC power and the wave-generating parameters of the rectifier circuit may be inputted into a PWM generation module to generate driving signals of respective switch components in the three-phase matrix switching circuit and the rectifier circuit. Then, corresponding switch components are driven by using the driving signals of respective switch components. The PWM generation module may be a single-chip microcomputer, a DSP chip, an FPGA chip, or the like.

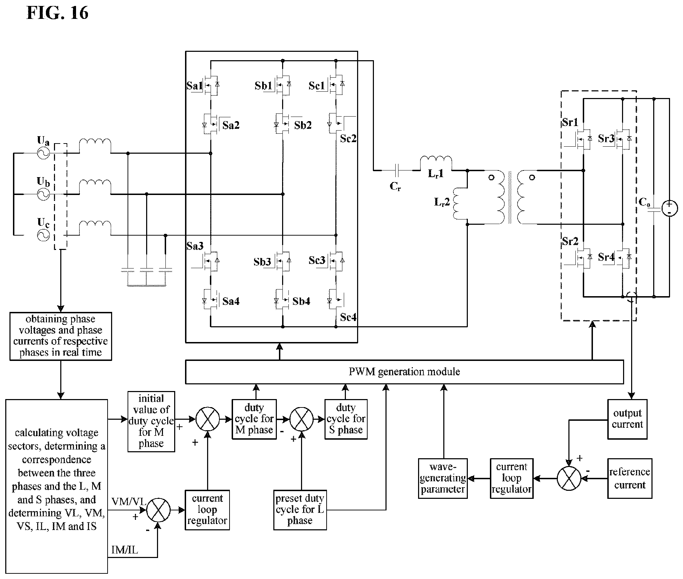

It should be noted that if the converter is a current-type converter, as shown in Figure 16, then it is not necessary to provide a voltage loop in a control loop on the output side, and the current loop is set to a preconfigured reference current.

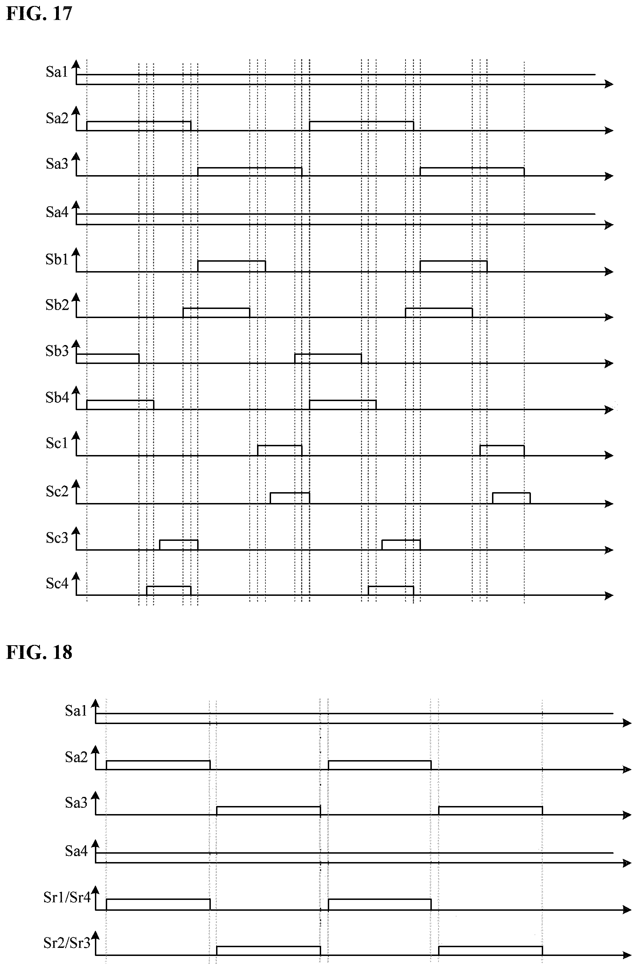

In an example, when the input voltage satisfies |Ua|>|Ub|>|Uc|, and Ua>0, Ub<0, Uc<0, in the t1 time period as shown in Figure 4, the A phase corresponds to the L phase, the B phase corresponds to the M phase, and the C phase corresponds to the S phase. The L phase, the M phase and the S phase have the same wave-generating frequency. For example, a preset duty cycle for the L phase is 0.5, and the driving signals of respective switch components obtained through the control method provided by the embodiment of the present disclosure are shown in Figure 17 and Figure 18. The driving signals of respective switch components are described below with reference to Figure 17 and Figure 18.

A switch branch connected to the L phase (the A phase) includes switch components Sa1 to Sa4. In this case, Sa1 and Sa4 are driven by freewheeling diodes. In order to improve efficiency and reduce unnecessary switching actions, Sa1 and Sa4 remain normally open. Sa2 and Sa3 are driven by rectifier diodes, being turned on complementarily with a duty cycle of 0.5, and dead zones are set.

It should be noted that, by configuring the L-phase freewheeling diodes to be normally on, the number of times of switching may be reduced, a switching loss may be reduced, and an efficiency of the converter may be improved. By configuring the duty cycle of the L-phase driving signal to be a fixed constant, the L-phase rectifier diodes are turned on complementarily, and no adjustment is required, thereby simplifying the control.

A switch branch connected to the M phase (the B phase) includes switch components Sb1 to Sb4. In this case, Sb1 is driven by a rectifier diode and is turned on together with Sa3 simultaneously. A duty cycle of Sb1 driving signal is less than or equal to a duty cycle of Sa3 driving signal. It is switched to the S phase after Sb1 is turned off. Sb2 is driven by a freewheeling diode. Sb2 is turned on before Sa2 is turned off, so that there is a freewheeling circuit after Sa2 is turned off, thereby creating a zero voltage switch (ZVS) condition for Sa3 and Sb1. Sb2 is turned off before Sb1 is turned off, so that a short circuit of the M and S phases in switching from the M phase to the S phase is avoided. Sb3 is driven by a freewheeling diode. Sb3 is turned on before Sa3 is turned off, so that there is a freewheeling circuit after Sa3 is turned off, thereby creating a ZVS condition for Sa2 and Sb4. Sb3 is turned off before Sb4 is turned off, so that a short circuit of the M and S phases in switching from the M phase to the S phase is avoided. Sb4 is driven by a rectifier diode and is turned on together with Sa2 simultaneously. A duty cycle of Sb4 driving signal is less than or equal to a duty cycle of Sa2 driving signal. It is switched to the S phase after Sb4 is turned off.

A switch branch connected to the S phase (the C phase) includes switch components Sc1 to Sc4. In this case, Sc1 is driven by a rectifier diode. Sc1 is turned on after Sb2 is turned off and before Sb1 is turned off. There is a period of time in which the rectifier diodes for the M and S phases are in on state and the freewheeling diodes for the M and S phases are in off state. Since a phase voltage difference between the L phase and the M phase is greater than a phase voltage difference between the L phase and the S phase, the current flows through the M phase. That is, the L and M phases operate, and no current flows through the S phase. Therefore, Sc1 is zero current switch (ZCS), and Sc1 and Sa3 are turned off simultaneously. Sc2 is driven by a freewheeling diode. Sc2 is turned on after Sb1 is turned off. As Sc1 is already turned on at this time, the current flows through the S phase after Sb1 is turned off, and therefore Sc2 is ZVS, and Sc2 is turned off when Sa2 is turned on. Sc3 is driven by a freewheeling diode. Sc3 is turned on after Sb4 is turned off. As Sc4 is already turned on at this time, the current flows through the S phase after Sb4 is turned off, and therefore Sc3 is ZVS, and Sc3 is turned off when Sa3 is turned on. Sc4 is driven by a rectifier diode. Sc4 is turned on after Sb3 is turned off and before Sb4 is turned off. There is a period of time in which the rectifier diodes for the M and S phases are in on state and the freewheeling diodes for the M and S phases are in off state. Since a phase voltage difference between the L phase and the M phase is greater than a phase voltage difference between the L phase and the S phase, the current flows through the M phase. That is, the L and M phases operate, and no current flows through the S phase. Therefore, Sc4 is ZCS, and Sc4 and Sa2 are turned off simultaneously.

It should be noted that, as can be seen from the driving signals of the respective switch components, a timing sequence where the M-phase freewheeling diode is turned on before the L-phase rectifier diode is turned off provides a freewheeling circuit after the L-phase rectifier diode is turned off, thereby implementing ZVS for the L-phase rectifier diode and the M-phase rectifier diode. A timing sequence where the M-phase freewheeling diode is turned off, the S-phase rectifier diode is turned on, the M-phase rectifier diode is turned off, and the S-phase freewheeling diode is turned on avoids the short circuit for the M and S phases when switching from the M phase to the S phase, and simultaneously implements ZVZCS for the S-phase rectifier diode and ZVS for the S-phase freewheeling diode.

As shown in Figure 18, the rectifier circuit generates waves according to the switch component of the switch branch corresponding to the L phase. When Sa2 is turned on, Sr1 and Sr4 are turned on simultaneously. When Sa3 is turned on, Sr2 and Sr3 are turned on simultaneously.

In the embodiment of the present disclosure, the switch components in the switch branches connected to the A phase, the B phase, and the C phase of the three-phase AC power can all be soft-turned on. Zero-voltage switching (ZVS) for the A-phase rectifier switch component, zero-voltage and zero-current switching (ZVZCS) for the A-phase freewheeling switch component, ZVS for the B-phase rectifier switch component, ZVZCS for the B-phase freewheeling switch component, zero-current switching (ZCS) for the C-phase rectifier switch component, and ZVS for the C-phase freewheeling switch component can be implemented.

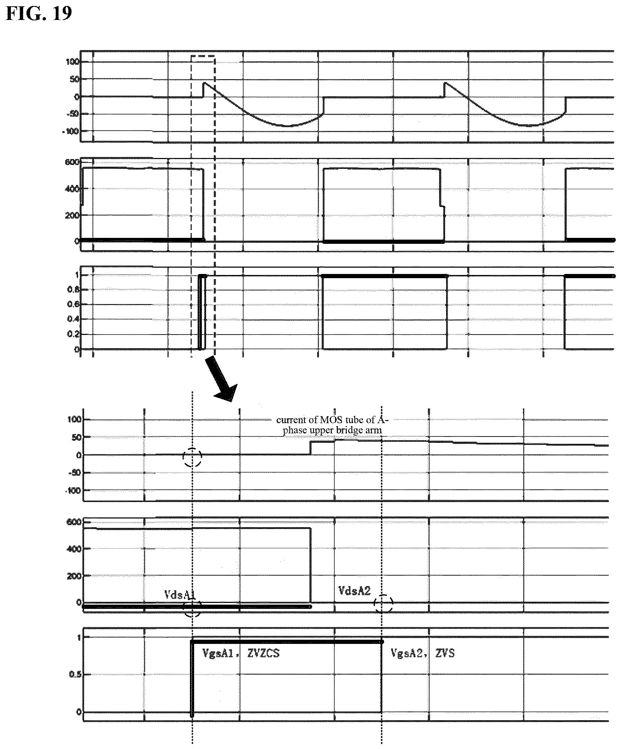

The soft-turn on of the switch components for the A, B and C phases is analyzed below in conjunction with Figure 19 to Figure 21.

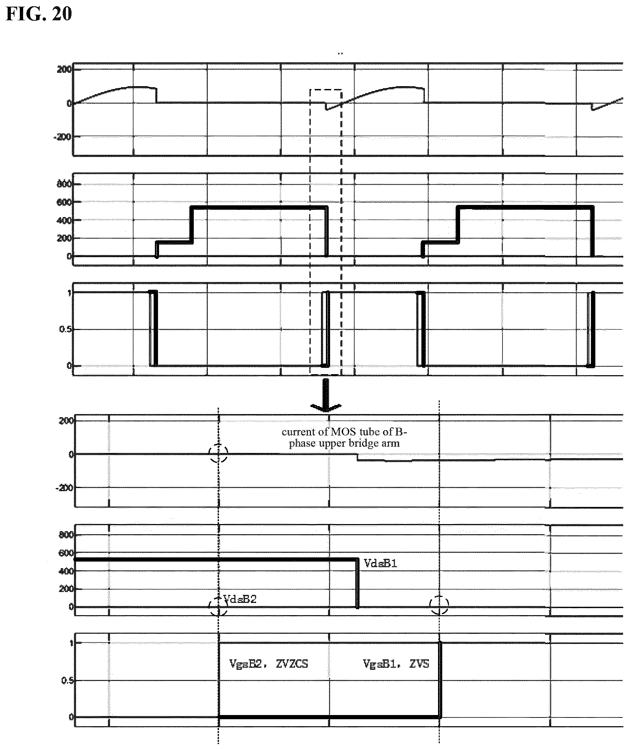

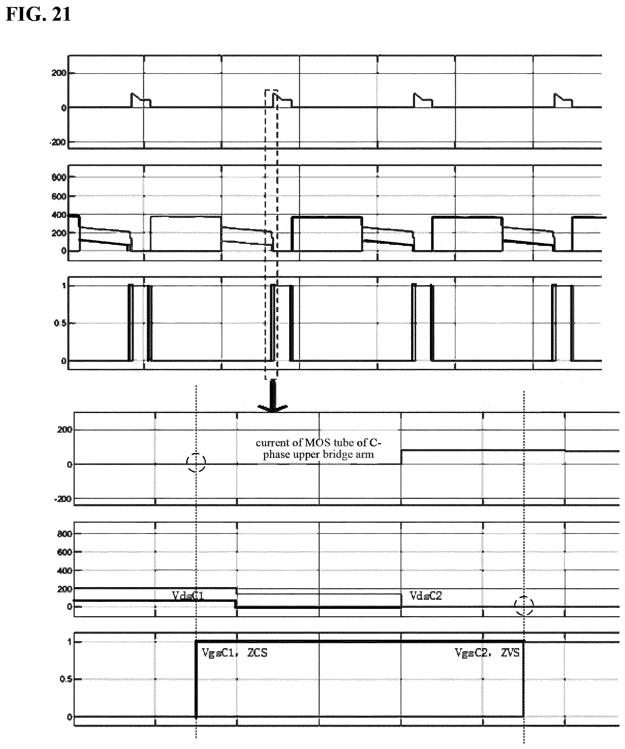

As shown in Figure 19, as can be seen from the voltage waveform, the current waveform and the switching action of the switch component of the A-phase upper bridge arm during part of the period, the A-phase rectifier switch component has a zero voltage when closed, and therefore the rectifier switch component is ZVS. The A-phase freewheeling switch component has a zero voltage and a zero current when closed, and therefore the freewheeling switch component is ZVZCS. As shown in Figure 20, as can be seen from the voltage waveform, the current waveform and the switching action of the switch component of the B-phase upper bridge arm during part of the period, the B-phase rectifier switch component has a zero voltage when closed, and therefore the rectifier switch component is ZVS. The B-phase freewheeling switch component has a zero voltage and a zero current when closed, and therefore the freewheeling switch component is ZVZCS. As shown in Figure 21, as can be seen from the voltage waveform, the current waveform and the switching action of the switch component of the C-phase upper bridge arm during part of the period, the C-phase rectifier switch component has a zero current when closed, and therefore the rectifier switch component is ZCS. The C-phase freewheeling switch component has a zero voltage when closed, and therefore the freewheeling switch component is ZVS.

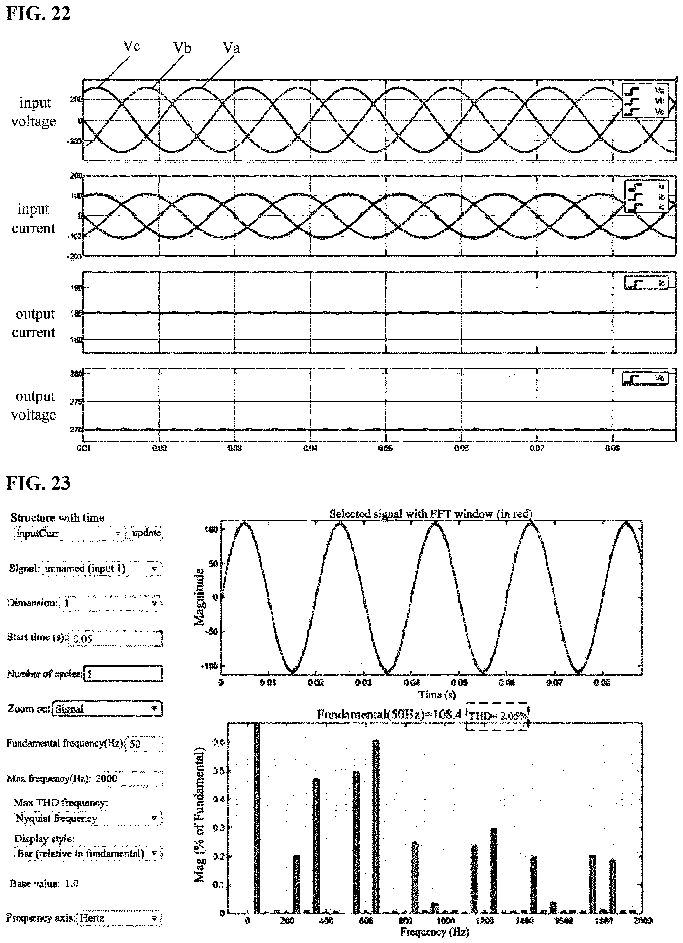

In another example, it is assumed that the three-phase AC power has a rated input voltage of 380V, 50HZ, a rated output voltage of 270V, and a rated output power of 50KW. With the control method provided in the embodiment of the present disclosure, a steady-state waveform of the AC-DC converter is shown in Figure 22. The three-phase input current is stable and the distortion is small, its phase tracks the phase of the input voltage, the output current and the output voltage are stable, and the output voltage ripple is less than 0.5V. Fast Fourier transform (FFT) analysis is performed on the input current and, as shown in Figure 23, the THD is 2.05%.

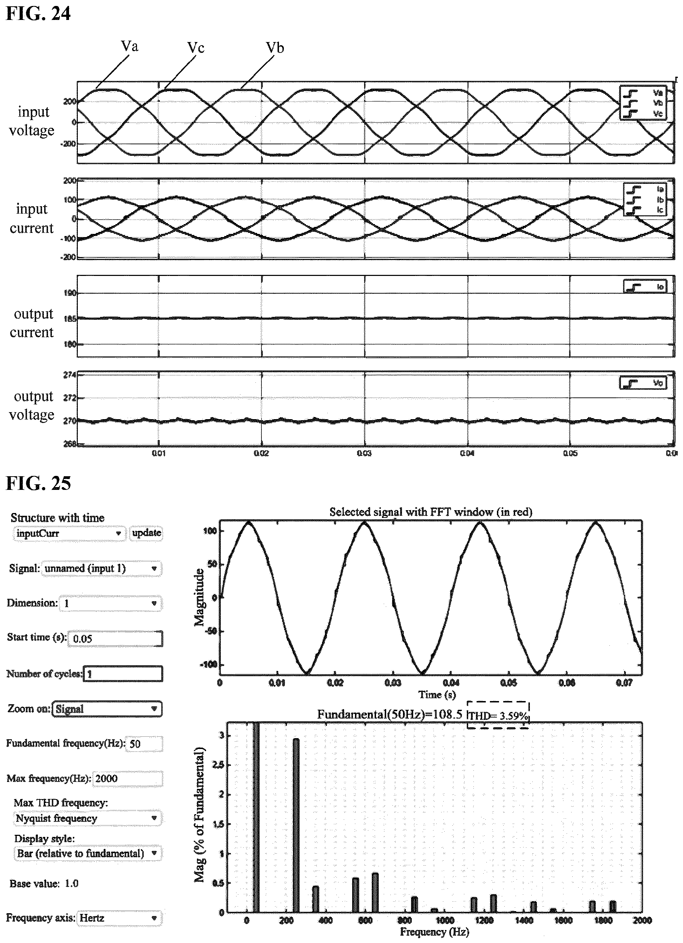

The harmonic suppression capability was tested. As shown in Figure 24, the 7th harmonic with an amplitude of 3% of a rated input voltage is injected into the three-phase input voltage. In this case, as shown in Figure 25, the THD of the input current is 3.59%.

The control method for the three-phase single-stage AC-DC converter provided by the embodiment of the present disclosure is described in detail above with reference to specific embodiments. In the control method provided by the embodiment of the present disclosure, on one hand, the input parameters of the three-phase AC power are obtained in real time, the duty cycles of driving signals for respective phases are determined based on the obtained input parameters, and the driving signals are generated based on the duty cycles of driving signals for respective phases so as to control switch components of corresponding switch branches. In this way, control of an input current of the three-phase AC power is realized. On the other hand, the output parameters of the rectifier circuit are obtained, and the wave-generating parameters of the rectifier circuit are determined based on the output parameters of the rectifier circuit. Driving signals are generated based on the wave-generating parameters, so as to control corresponding switch components in the rectifier circuit. In this way, control of an output voltage and an output current is realized.

The input current, the output voltage and the output current are controlled, so that the three-phase single-stage AC-DC converter has a strong harmonic suppression capability and the THD of the input current is small. Besides, all switch components are enabled to be soft-turned on. Therefore, the efficiency of the three-phase single-stage AC-DC converter is improved.

Based on the same concept, a control apparatus for a three-phase single-stage AC-DC converter is further provided in an embodiment of the present disclosure. The principle of solving problems with the apparatus is similar to the principle of solving problems with the method described above. The apparatus may be implemented with reference to the implementation of the method, and repetitive details are not described here.

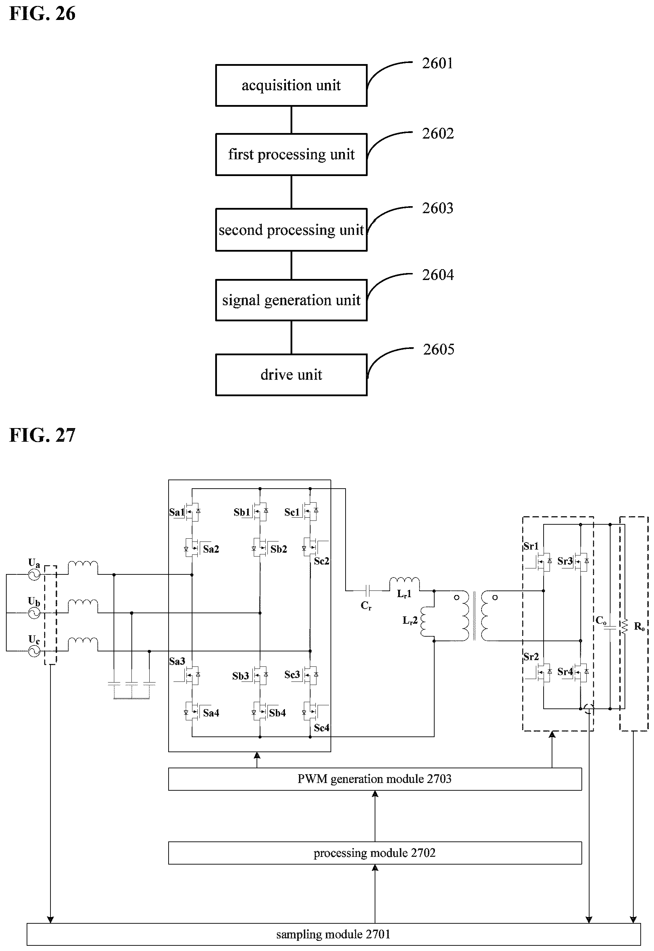

As shown in Figure 26, a control apparatus for a three-phase single-stage AC-DC converter is provided according to an embodiment of the present disclosure. The apparatus includes an acquisition unit 2601, a first processing unit 2602, a second processing unit 2603, a signal generation unit 2604 and a drive unit 2605.

The acquisition unit 2601 is configured to obtain input parameters of a three-phase AC power and output parameters of a rectifier circuit in real time.

The first processing unit 2602 is configured to determine duty cycles of driving signals for respective phases based on the input parameters of the three-phase AC power.

The second processing unit 2603 is configured to determine wave-generating parameters of the rectifier circuit based on the output parameters of the rectifier circuit.

The signal generation unit 2604 is configured to generate driving signals of switch components in the three-phase matrix switching circuit and the rectifier circuit, based on the determined duty cycles of driving signals for respective phases and the wave-generating parameters of the rectifier circuit.

The driving unit 2605 is configured to drive switch components by using the generated driving signals of the switch components.

In a possible embodiment, the first processing unit 2602 is specifically configured to:

determine voltage sectors of the three-phase AC power based on the input parameters of the three-phase AC power;

determine a correspondence between three phases of the three-phase AC power and an L phase, an M phase, and an S phase, based on the voltage sectors of the three-phase AC power, wherein in a case where the input parameters include phase voltages of respective phases of the three-phase AC power, an absolute value of the phase voltage of the L phase is the largest among three phase voltages, an absolute value of the phase voltage of the S phase is the smallest among the three phase voltages, and an absolute value of the phase voltage of the M phase is smaller than the absolute value of the phase voltage of the L phase and greater than the absolute value of the phase voltage of the S phase;

determine duty cycles of driving signals for the L phase, the M phase and the S phase, respectively, based on the input parameters of the three-phase AC power; and

determine duty cycles of driving signals for respective phases of the three-phase AC power based on the correspondence between three phases of the three-phase AC power and the L phase, the M phase, and the S phase and the duty cycles of driving signals for the L phase, the M phase, and the S phase.

In a possible embodiment, the first processing unit 2602 is specifically configured to:

determine a duty cycle of a driving signal for a target phase which is the M phase or the S phase, based on the input parameters of the three-phase AC power; and

determine a duty cycle of a driving signal for another phase based on the duty cycle of the driving signal for the target phase and a preset duty cycle of the driving signal for the L phase.

In a possible embodiment, the input parameters include phase voltages of respective phases of the three-phase AC power; and the first processing unit 2602 is specifically configured to determine the duty cycle of the driving signal for the target phase based on the phase voltages of respective phases.

In a possible embodiment, the input parameters include phase voltages and phase currents of respective phases of the three-phase AC power; and the first processing unit 2602 is specifically configured to:

determine a given value of duty cycle based on a ratio of a phase voltage of the target phase to a phase voltage of the L phase;

determine a feedback value of duty cycle based on a ratio of a phase current of the target phase to a phase current of the L phase;

correct the given value of duty cycle by using the feedback value of duty cycle, to obtain a target value; and

input the target value into a current loop regulator to obtain the duty cycle of the driving signal for the target phase.

In a possible embodiment, the input parameters include phase voltages and phase currents of respective phases of the three-phase AC power; and the first processing unit 2602 is specifically configured to:

determine an initial value of the duty cycle of the driving signal for the target phase based on the phase voltages of respective phases;

determine a given value of duty cycle based on a ratio of a phase voltage of the target phase to a phase voltage of the L phase; determine a feedback value of duty cycle based on a ratio of a phase current of the target phase to a phase current of the L phase; correct the given value of duty cycle by using the feedback value of duty cycle to obtain a target value; and input the target value into a current loop regulator to obtain an adjustment amount of the duty cycle of the driving signal for the target phase; and

correct the initial value of the duty cycle of the driving signal for the target phase by using the adjustment amount of the duty cycle of the driving signal for the target phase, to obtain the duty cycle of the driving signal for the target phase.

In a possible embodiment, the output parameters include an output voltage; and the second processing unit 2603 is specifically configured to:

determine an error value of the output voltage based on the output voltage and a preconfigured reference voltage; and

input the error value of the output voltage into a voltage loop regulator to obtain the wave-generating parameters of the rectifier circuit.

In a possible embodiment, the output parameters include an output current; and
the second processing unit 2603 is specifically configured to:

determine an error value of the output current based on the output current and a preconfigured reference current; and

input the error value of the output current into a current loop regulator to obtain the wave-generating parameters of the rectifier circuit.

In a possible embodiment, the output parameters include an output voltage and an output current; and
the second processing unit 2603 is specifically configured to:

determine an error value of the output voltage based on the output voltage and a preconfigured reference voltage;

input the error value of the output voltage into a voltage loop regulator to obtain a reference value of the output current;

determine an error value of the output current based on the output current and the reference value of the output current; and

input the error value of the output current into a current loop regulator to obtain the wave-generating parameters of the rectifier circuit.

In a possible embodiment, the wave-generating parameters include a wave-generating frequency and a wave-generating phase shift angle.

Based on the same concept, a control apparatus for a three-phase single-stage AC-DC converter is further provided in another embodiment of the present disclosure. The principle of solving problems with the apparatus is similar to the principle of solving problems with the method described above. The apparatus may be implemented with reference to the implementation of the method, and repetitive details are not described here.

As shown in Figure 27, a control apparatus for a three-phase single-stage AC-DC converter is further provided according to another embodiment of the present disclosure. The apparatus includes a sampling module 2701, a processing module 2702 and a PWM generation module 2703.

The sampling module 2701 is configured to obtain input parameters of a three-phase AC power and output parameters of a rectifier circuit in real time.

The processing module 2702 is configured to determine duty cycles of driving signals for respective phases based on the input parameters of the three-phase AC power, and determine wave-generating parameters of the rectifier circuit based on the output parameters of the rectifier circuit.

The PWM generation module 2703 is configured to generate driving signals of respective switch components in the three-phase matrix switching circuit and the rectifier circuit, based on the determined duty cycles of driving signals for respective phases and the wave-generating parameters of the rectifier circuit, and to drive corresponding switch components by using the generated driving signals of respective switch components.

Based on the same concept, an electronic device is further provided in another embodiment of the present disclosure. The principle of solving problems with the device is similar to the principle of solving problems with the method described above. The device may be implemented with reference to the implementation of the method, and repetitive details are not described here.

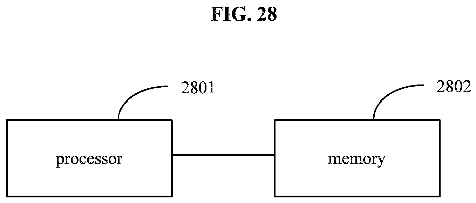

As shown in Figure 28, an electronic device is provided in an embodiment of the present disclosure. The electronic device includes a processor 2801 and a memory 2802 storing executable instructions for the processor 2801. The processor 2801 is configured to execute the executable instructions to implement the following steps:

obtaining input parameters of a three-phase AC power and output parameters of a rectifier circuit in real time;

determining duty cycles of driving signals for respective phases based on the input parameters of the three-phase AC power;

determining wave-generating parameters of the rectifier circuit based on the output parameters of the rectifier circuit;

generating driving signals of respective switch components in the three-phase matrix switching circuit and the rectifier circuit, based on the determined duty cycles of driving signals for respective phases and the wave-generating parameters of the rectifier circuit; and

driving corresponding switch components by using the generated driving signals of respective switch components.

In a possible embodiment, the processor 2801 is specifically configured to:

determine voltage sectors of the three-phase AC power based on the input parameters of the three-phase AC power;

determine a correspondence between three phases of the three-phase AC power and an L phase, an M phase, and an S phase, based on the voltage sectors of the three-phase AC power, wherein in a case where the input parameters include phase voltages of respective phases of the three-phase AC power, an absolute value of the phase voltage of the L phase is the largest among three phase voltages, an absolute value of the phase voltage of the S phase is the smallest among the three phase voltages, and an absolute value of the phase voltage of the M phase is smaller than the absolute value of the phase voltage of the L phase and greater than the absolute value of the phase voltage of the S phase;

determine duty cycles of driving signals for the L phase, the M phase and the S phase, respectively, based on the input parameters of the three-phase AC power; and

determine duty cycles of driving signals for respective phases of the three-phase AC power based on the correspondence between three phases of the three-phase AC power and the L phase, the M phase, and the S phase and the duty cycles of driving signals for the L phase, the M phase, and the S phase.

In a possible embodiment, the processor 2801 is specifically configured to:

determine a duty cycle of a driving signal for a target phase which is the M phase or the S phase, based on the input parameters of the three-phase AC power; and

determine a duty cycle of a driving signal for another phase based on the duty cycle of the driving signal for the target phase and a preset duty cycle of the driving signal for the L phase.

In a possible embodiment, the input parameters include phase voltages of respective phases of the three-phase AC power; and
the processing 2801 is specifically configured to determine the duty cycle of a driving signal for the target phase based on the phase voltages of respective phases.

In a possible embodiment, the input parameters include phase voltages and phase currents of respective phases of the three-phase AC power; and
the processor 2801 is specifically configured to:

determine a given value of duty cycle based on a ratio of a phase voltage of the target phase to a phase voltage of the L phase;

determine a feedback value of duty cycle based on a ratio of a phase current of the target phase to a phase current of the L phase;

correct the given value of duty cycle by using the feedback value of duty cycle to obtain a target value; and

input the target value into a current loop regulator to obtain the duty cycle of the driving signal for the target phase.

In a possible embodiment, the input parameters include phase voltages and phase currents of respective phases of the three-phase AC power; and
the processor 2801 is specifically configured to:

determine an initial value of the duty cycle of the driving signal for the target phase based on the phase voltages of respective phases;

determine a given value of duty cycle based on a ratio of a phase voltage of the target phase to a phase voltage of the L phase; determine a feedback value of duty cycle based on a ratio of a phase current of the target phase to a phase current of the L phase; correct the given value of duty cycle by using the feedback value of duty cycle to obtain a target value; and input the target value into a current loop regulator to obtain an adjustment amount of the duty cycle of the driving signal for the target phase; and

correct the initial value of the duty cycle of the driving signal for the target phase by using the adjustment amount of the duty cycle of the driving signal for the target phase, to obtain the duty cycle of the driving signal for the target phase.

In a possible embodiment, the output parameters include an output voltage; and
the processor 2801 is specifically configured to:

determine an error value of the output voltage based on the output voltage and a preconfigured reference voltage;

input the error value of the output voltage into a voltage loop regulator to obtain the wave-generating parameters of the rectifier circuit.

In a possible embodiment, the output parameters include an output current; and
the processor 2801 is specifically configured to:

determine an error value of the output current based on the output current and a preconfigured reference current; and

input the error value of the output current into a current loop regulator to obtain the wave-generating parameters of the rectifier circuit.

In a possible embodiment, the output parameters include an output voltage and an output current; and
the processor 2801 is specifically configured to:

determine an error value of the output voltage based on the output voltage and a preconfigured reference voltage;

input the error value of the output voltage into a voltage loop regulator to obtain a reference value of the output current;

determine an error value of the output current based on the output current and the reference value of the output current; and

input the error value of the output current into a current loop regulator to obtain the wave-generating parameters of the rectifier circuit.

In a possible embodiment, the wave-generating parameters include a wave-generating frequency and a wave-generating phase shift angle.

Based on the same inventive concept, a computer storage medium is provided in an embodiment of the present disclosure. The computer storage medium includes computer program code which, when executed on a computer, causes the computer to implement the control method for the three-phase single-stage AC-DC converter as described in any of the above embodiments. Since the principle of solving problems with the computer storage medium is similar as the principle of solving problems with the control method for the three-phase single-stage AC-DC converter, the computer storage medium may be implemented with reference to the implementation of the method, and repetitive details are not described here.

In a specific implementation, the computer storage medium may include a universal serial bus (USB) flash drive, a mobile hard disk, a read-only memory (ROM), a random access memory (RAM), a magnetic disk, an optical disk, and other storage medium capable of storing program codes.

Based on the same inventive concept, a computer program product is further provided in an embodiment of the present disclosure. The computer program product includes computer program code which, when executed on a computer, causes the computer to implement the control method for the three-phase single-stage AC-DC converter as described in any of the above embodiments. Since the principle of solving problems with the computer program product is similar to the principle of solving problems with the control method for the three-phase single-stage AC-DC converter, the computer program product may be implemented with reference to the implementation of the method, and repetitive details are not described here.

The computer program product may be implemented by any combination of one or more readable medium. The readable medium may be a readable signal medium or a readable storage medium. The readable storage medium may be, but is not limited to, a system, an apparatus, or a device in an electronic, magnetic, optical, electromagnetic, infrared, or semi-conductive form, or any combination thereof. More specific examples (non-exhaustive list) of the readable storage medium include an electrical connection with one or more wires, a portable disk, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device or any suitable combination thereof.

Those skilled in the art should appreciate that embodiments of the present disclosure may be provided as a method, a system, or a computer program product. Thus, the present disclosure may be implemented with an entirely hardware embodiment, an entirely software embodiment, or an embodiment combining software and hardware. Furthermore, the present disclosure may be implemented as a computer program product embodied on one or more computer-usable storage medium (including, but not limited to, a magnetic disk storage or an optical storage) storing computer-usable program code thereon.

The present disclosure is described with reference to flow charts and/or block diagrams of the method, the device (system), and the computer program product according to the embodiments of the present disclosure. It should be understood that each process and/or block in the flowchart illustrations and/or block diagrams, and combinations of processes and/or blocks in the flowchart illustrations and/or block diagrams, may be implemented by computer program instructions. The computer program instructions may be provided to a processor of a general-purpose computer, a special-purpose computer, an embedded processor, or other programmable data processing device to produce a machine, such that the instructions executed by the processor of the computer or other programmable data processing device produce a device for implementing functions specified in one or more processes of the flowcharts and/or one or more blocks of the block diagrams.

The computer program instructions may be stored in a computer readable memory which is capable of guiding the computer or other programmable data processing device to operate in a certain manner, such that the instructions stored in the computer readable memory generate a product including an instruction apparatus which implements the functions specified in one or more processes of the flowcharts and/or one or more blocks of the block diagrams.

These computer program instructions may be loaded onto a computer or other programmable data processing device, causing a series of operating steps to be performed on the computer or other programmable device to produce computer-implemented processing, so that the instructions executed on the computer or other programmable device provide steps for implementing the functions specified in one or more processes of the flowcharts and/or one or more blocks of the block diagrams.

Apparently, various modifications and variations to the embodiments of the present disclosure can be made by those skilled in the art without departing from the spirit and scope of the present disclosure. Therefore, as the modifications and variations of the present disclosure fall within the scope of the claims of the present disclosure and equivalents thereof, the present disclosure is also intended to include such modifications and variations.

**Claims**

1. A three-phase single-stage AC-DC converter, **characterized by** comprising: a three-phase matrix switching circuit, a resonant circuit, an isolation circuit, and a rectifier circuit, wherein

   the three-phase matrix switching circuit is connected to a three-phase AC power and comprises three independent switch branches, each of the switch branches comprises an upper bridge arm and a lower bridge arm, an intermediate point between the upper bridge arm and the lower bridge arm in each of the switch branches is connected to a phase of AC input, and each bridge arm comprises one bidirectional switch component or two switch components which are connected in series in reverse; the resonant circuit comprises a resonant capacitor, a resonant inductor and an excitation inductor which are connected in series between a common endpoint of upper bridge arms of the three switch branches and a common endpoint of lower bridge arms of the three switch branches; a side of the isolation circuit is connected to the resonant circuit and another side of the isolation circuit is connected to the rectifier circuit; and the rectifier circuit comprises at least two switch components, an input side of the rectifier circuit is connected to the isolation circuit, and an output side of the rectifier circuit is connected to a load device.

2. The converter according to claim 1, **characterized by** further comprising:

   a three-phase filter circuit connected between the three-phase AC power and the three-phase matrix switching circuit, wherein the three-phase filter circuit comprises three filter branches, and each of the filter branches is connected to a phase of AC input; and a filter capacitor connected between the rectifier circuit and the load device, wherein the filter capacitor filters an output of the rectifier circuit, wherein the rectifier circuit comprises a full-bridge rectifier circuit and a half-bridge rectifier circuit, and wherein the isolation circuit comprises a transformer, a primary side of the transformer is connected in parallel with the excitation inductor, and a secondary side of the transformer is connected to the rectifier circuit.

3. A control method for the three-phase single-stage AC-DC converter according to claim 1 or 2, **characterized in that** the method comprises:

   obtaining input parameters of a three-phase AC power and output parameters of a rectifier circuit in real time; determining duty cycles of driving signals for respective phases based on the input parameters of the three-phase AC power; determining wave-generating parameters of the rectifier circuit based on the output parameters of the rectifier circuit; generating driving signals of respective switch components in a three-phase matrix switching circuit and the rectifier circuit, based on the determined duty cycles of driving signals for respective phases and the wave-generating parameters of the rectifier circuit; and driving corresponding switch components by using the generated driving signals of respective switch components.

4. The method according to claim 3, **characterized in that**, determining duty cycles of driving signals for respective phases based on the input parameters of the three-phase AC power comprises:

   determining voltage sectors of the three-phase AC power based on the input parameters of the three-phase AC power; determining a correspondence between three phases of the three-phase AC power and an L phase, an M phase, and an S phase, based on the voltage sectors of the three-phase AC power, wherein in a case where the input parameters comprise phase voltages of respective phases of the three-phase AC power, an absolute value of the phase voltage of the L phase is the largest among three phase voltages, an absolute value of the phase voltage of the S phase is the smallest among the three phase voltages, and an absolute value of the phase voltage of the M phase is smaller than the absolute value of the phase voltage of the L phase and greater than the absolute value of the phase voltage of the S phase;

determining duty cycles of driving signals for the L phase, the M phase and the S phase, respectively, based on the input parameters of the three-phase AC power; and

determining duty cycles of driving signals for respective phases of the three-phase AC power based on the correspondence between the three phases of the three-phase AC power and the L phase, the M phase, and the S phase and the duty cycles of driving signals for the L phase, the M phase, and the S phase.

5. The method according to claim 4, **characterized in that**, determining duty cycles of driving signals for the L phase, the M phase and the S phase respectively based on the input parameters of the three-phase AC power comprises:

determining a duty cycle of a driving signal for a target phase which is the M phase or the S phase, based on the input parameters of the three-phase AC power; and

determining a duty cycle of a driving signal for another phase based on the duty cycle of the driving signal for the target phase and a preset duty cycle of a driving signal for the L phase.

6. The method according to claim 5, **characterized in that** the input parameters comprise phase voltages of respective phases of the three-phase AC power; and

determining a duty cycle of a driving signal for a target phase based on the input parameters of the three-phase AC power comprises: determining the duty cycle of the driving signal for the target phase based on the phase voltages of respective phases.

7. The method according to claim 5, **characterized in that** the input parameters comprise phase voltages and phase currents of respective phases of the three-phase AC power; and

determining a duty cycle of a driving signal for a target phase based on the input parameters of the three-phase AC power comprises:

determining a given value of duty cycle based on a ratio of a phase voltage of the target phase to a phase voltage of the L phase;

determining a feedback value of duty cycle based on a ratio of a phase current of the target phase to a phase current of the L phase;

correcting the given value of duty cycle by using the feedback value of duty cycle, to obtain a target value; and

inputting the target value into a current loop regulator to obtain the duty cycle of the driving signal for the target phase.

8. The method according to claim 5, **characterized in that** the input parameters comprise phase voltages and phase currents of respective phases of the three-phase AC power; and

determining a duty cycle of a driving signal for a target phase based on the input parameters of the three-phase AC power comprises:

determining an initial value of the duty cycle of the driving signal for the target phase based on the phase voltages of respective phases;

determining a given value of duty cycle based on a ratio of a phase voltage of the target phase to a phase voltage of the L phase; determining a feedback value of duty cycle based on a ratio of a phase current of the target phase to a phase current of the L phase; correcting the given value of duty cycle by using the feedback value of duty cycle to obtain a target value; and inputting the target value into a current loop regulator to obtain an adjustment amount of the duty cycle of the driving signal for the target phase; and correcting the initial value of the duty cycle of the driving signal for the target phase by using the adjustment amount of the duty cycle of the driving signal for the target phase, to obtain the duty cycle of the driving signal for the target phase.

9. The method according to claim 3, **characterized in that** the output parameters comprise an output voltage; and

determining wave-generating parameters of the rectifier circuit based on the output parameters of the rectifier circuit comprises:

determining an error value of the output voltage based on the output voltage and a preconfigured reference voltage; and

inputting the error value of the output voltage into a voltage loop regulator to obtain the wave-generating parameters of the rectifier circuit, wherein the wave-generating parameters comprise a wave-generating frequency and a wave-generating phase shift angle.

10. The method according to claim 3, **characterized in that** the output parameters comprise an output current; and

determining wave-generating parameters of the rectifier circuit based on the output parameters of the rectifier circuit comprises:

determining an error value of the output current based on the output current and a preconfigured reference current; and

inputting the error value of the output current into a current loop regulator to obtain the wave-generating parameters of the rectifier circuit,

wherein the wave-generating parameters comprise a wave-generating frequency and a wave-generating phase shift angle.

11. The method according to claim 3, **characterized in that** the output parameters comprise an output voltage and an output current; and

determining wave-generating parameters of the rectifier circuit based on the output parameters of the rectifier circuit comprises:

determining an error value of the output voltage based on the output voltage and a preconfigured reference voltage;

inputting the error value of the output voltage into a voltage loop regulator to obtain a reference value of the output current;

determining an error value of the output current based on the output current and the reference value of the output current; and

inputting the error value of the output current into a current loop regulator to obtain the wave-generating parameters of the rectifier circuit,

wherein the wave-generating parameters comprise a wave-generating frequency and a wave-generating phase shift angle.

12. A control apparatus for the three-phase single-stage AC-DC converter according to claim 1 or 2, **characterized in that** the apparatus comprises:

an acquisition unit, configured to obtain input parameters of a three-phase AC power and output parameters of a rectifier circuit in real time;

a first processing unit, configured to determine duty cycles of driving signals for respective phases based on the input parameters of the three-phase AC power;

a second processing unit, configured to determine wave-generating parameters of the rectifier circuit based on the output parameters of the rectifier circuit;

a signal generation unit, configured to generate driving signals of respective switch components in a three-phase matrix switching circuit and the rectifier circuit, based on the determined duty cycles of driving signals for respective phases and the wave-generating parameters of the rectifier circuit; and

a driving unit, configured to drive corresponding switch components by using the generated driving signals of respective switch components.

13. A control apparatus for the three-phase single-stage AC-DC converter according to claim 1 or 2, **characterized in that** the apparatus comprises:

a sampling module, configured to obtain input parameters of a three-phase AC power and output parameters of a rectifier circuit in real time;

a processing module, configured to determine duty cycles of driving signals for respective phases based on the input parameters of the three-phase AC power, and to determine wave-generating parameters of the rectifier circuit based on the output parameters of the rectifier circuit; and

a pulse width modulation, PWM, generation module, configured to generate driving signals of respective switch components in a three-phase matrix switching circuit and the rectifier circuit, based on the determined duty cycles of driving signals for respective phases and the wave-generating parameters of the rectifier circuit, and to drive corresponding switch components by using the generated driving signals of respective switch components.

14. An electronic device, **characterized by** comprising: a processor; and a memory storing executable instructions for the processor,

wherein the processor is configured to execute the executable instructions to implement the method according to any one of claims 3 to 11.

15. A computer storage medium having a computer program stored thereon, **characterized in that** the computer program, when executed by a processor, causes the processor to implement the method according to any one of claims 3 to 11.

**FIG. 1**

**FIG. 2**

**FIG. 3**

obtaining input parameter of three-phase AC power and output parameter of rectifier circuit in real time — S301

determining duty cycles of driving signals for respective phases based on the input parameter of the three-phase AC power — S302

determining wave-generating parameter of the rectifier circuit based on the output parameter of the rectifier circuit — S303

generating driving signals of respective switch components in three-phase matrix switching circuit and the rectifier circuit based on the determined duty cycles of driving signals for respective phases and the wave-generating parameter of the rectifier circuit — S304

driving corresponding switch components by using the generated driving signals of respective switch components — S305

**FIG. 4**

**FIG. 5**

| phase voltages of respective phases VM, VL, VS | ──VM/VL──→ |
| phase currents of respective phases IM, IL, IS | ──IM/IL──→ |

target value → (+/−) → current loop regulator → duty cycle of driving signal for M phase

**FIG. 6**

| phase voltages of respective phases VM, VL, VS | ──VS/VL──→ |
| phase currents of respective phases IM, IL, IS | ──IS/IL──→ |

target value → (+/−) → current loop regulator → duty cycle of driving signal for S phase

**FIG. 7**

phase voltages of respective phases VM, VL, VS → initial value of duty cycle of driving signal for M phase → (+/+) → duty cycle of driving signal for M phase

phase voltages of respective phases VM, VL, VS ──VM/VL──→ target value → (+/−) → current loop regulator → adjustment amount of duty cycle (M phase)

phase currents of respective phases IM, IL, IS ──IM/IL──→

**FIG. 8**

```
┌─────────────────┐      ┌─────────────────┐           ┌─────────────────┐
│ phase voltages of│      │ initial value of│     +     │  duty cycle of  │
│ respective phases├─────▶│ duty cycle of   ├────▶⊗─────▶│ driving signal  │
│  VM, VL, VS     │      │ driving signal  │      │    │     for         │
│                 │      │ for M phase     │      -    │   M phase       │
└─────────────────┘      └─────────────────┘      │    └─────────────────┘
                                                  │
┌─────────────────┐  VS/VL                        │
│ phase voltages of├──────────┐                   │
│ respective phases│          │                   │
│  VM, VL, VS     │       target                  │
└─────────────────┘       │value                  │
                        + │    ┌──────────┐   ┌──────────────────┐
                         ⊗───▶│ current  ├──▶│ adjustment amount │
                        - │    │ loop     │   │ of duty cycle (S  │
┌─────────────────┐       │    │ regulator│   │     phase)        │
│ phase currents of│ IS/IL │    └──────────┘   └──────────────────┘
│ respective phases├──────┘
│  IM, IL, IS     │
└─────────────────┘
```

**FIG. 9**

```
┌─────────────────┐      ┌─────────────────┐           ┌─────────────────┐
│ phase voltages of│      │ initial value of│     +     │  duty cycle of  │
│ respective phases├─────▶│ duty cycle of   ├────▶⊗─────▶│ driving signal  │
│  VM, VL, VS     │      │ driving signal  │      │    │    for S        │
│                 │      │ for S phase     │      +    │    phase        │
└─────────────────┘      └─────────────────┘      │    └─────────────────┘
                                                  │
┌─────────────────┐  VS/VL                        │
│ phase voltages of├──────────┐                   │
│ respective phases│          │                   │
│  VM, VL, VS     │       target                  │
└─────────────────┘       │value                  │
                        + │    ┌──────────┐   ┌──────────────────┐
                         ⊗───▶│ current  ├──▶│ adjustment amount │
                        - │    │ loop     │   │ of duty cycle (S  │
┌─────────────────┐       │    │ regulator│   │     phase)        │
│ phase currents of│ IS/IL │    └──────────┘   └──────────────────┘
│ respective phases├──────┘
│  IM, IL, IS     │
└─────────────────┘
```

**FIG. 10**

```
┌─────────────────┐     ┌─────────────────┐              ┌─────────────────┐
│ phase voltages of│     │ initial value of duty│    +     │  duty cycle of  │
│ respective phases│────▶│ cycle of driving │────▶( X )──▶│driving signal for S│
│   VM, VL, VS     │     │ signal for S phase│          │      phase      │
└─────────────────┘     └─────────────────┘      -       └─────────────────┘
                                                   ▲
┌─────────────────┐                                │
│ phase voltages of│  VM/VL                         │
│ respective phases│────────┐                       │
│   VM, VL, VS     │        │                       │
└─────────────────┘        target                   │
                   +       value   ┌──────────┐  ┌─────────────────┐
                  ( X )───────────▶│ current loop│▶│ adjustment amount│
                   -               │ regulator │  │ of duty cycle (M │
                        │          └──────────┘  │     phase)      │
┌─────────────────┐     │                        └─────────────────┘
│ phase currents of│ IM/IL                       
│ respective phases│────┘
│   IM, IL, IS     │
└─────────────────┘
```

**FIG. 11**

```
┌─────────────────┐
│ reference voltage│────────────┐
└─────────────────┘            error
                          +    value   ┌──────────┐   ┌─────────────────┐
                         ( X )────────▶│ voltage loop│─▶│ wave-generating │
                          -            │ regulator │   │    parameter    │
┌─────────────────┐            │       └──────────┘   └─────────────────┘
│  output voltage  │────────────┘
└─────────────────┘
```

**FIG. 12**

```
┌─────────────────┐
│  output current  │────────────┐
└─────────────────┘            error
                          +    value   ┌──────────┐   ┌─────────────────┐
                         ( X )────────▶│ current loop│─▶│ wave-generating │
                          -            │ regulator │   │    parameter    │
┌─────────────────┐            │       └──────────┘   └─────────────────┘
│ reference current│────────────┘
└─────────────────┘
```

FIG. 13

**FIG. 14**

obtaining phase voltages and phase currents of respective phases of three-phase AC power, and output voltage and output current of rectifier circuit in real time ⟶ 1401

↓

calculating voltage sectors, determining L, M and S phases, and determining a correspondence between three phases of the AC power and the L, M and S phases ⟶ 1402

↓

determining duty cycle of driving signal for a target phase that is M phase or S phase ⟶ 1403

↓

determining duty cycle of driving signal for another phase based on a preset duty cycle of driving signal for L phase and the duty cycle of driving signal for the target phase ⟶ 1404

↓

determining duty cycles of driving signals for three phases of the AC power based on the correspondence between three phases of the AC power and the L, M and S phases, and the duty cycles of driving signals for the L, M and S phases ⟶ 1405

↓

determining error value of output voltage based on the output voltage and a preconfigured reference voltage, and inputting the error value of output voltage into voltage loop regulator to obtain reference value of output current ⟶ 1406

↓

determining error value of output current based on the output current and the reference value of output current, and inputting the error value of output current into current loop regulator to obtain wave-generating parameter of the rectifier circuit ⟶ 1407

↓

generating driving signals of respective switch components in three-phase matrix switching circuit and the rectifier circuit based on the duty cycles of driving signals for three phases of the AC power and the wave-generating parameter of the rectifier circuit ⟶ 1408

↓

driving corresponding switch components by using the driving signals of respective switch components ⟶ 1409

FIG. 15

**FIG. 16**

FIG. 17

FIG. 18

**FIG. 19**

current of MOS tube of A-
phase upper bridge arm

VdsA1            VdsA2

VgsA1, ZVZCS            VgsA2, ZVS

**FIG. 20**

current of MOS tube of B-phase upper bridge arm

VdsB1

VdsB2

VgsB2，ZVZCS          VgsB1，ZVS

**FIG. 21**

current of MOS tube of C-phase upper bridge arm

VdsC1　VdsC2

VgsC1, ZCS　VgsC2, ZVS

## FIG. 22

## FIG. 23

## FIG. 24

## FIG. 25

**FIG. 26**

**FIG. 27**

**FIG. 28**

| | |
|---|---|
| 2801 | 2802 |
| processor | memory |

Europäisches
Patentamt
European
Patent Office
Office européen
des brevets

# EUROPEAN SEARCH REPORT

Application Number

EP 25 17 7256

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 021 527 B (UNIV NANJING AERONAUTICS & ASTRONAUTICS) 21 June 2024 (2024-06-21) | 1-6,9-15 | INV. H02M1/42 |
| Y | * paragraph [0003] *<br>* paragraph [0005] - paragraph [0007] *<br>* paragraph [0053] *<br>* paragraph [0057] *<br>* paragraph [0059] *<br>* paragraph [0064] *<br>* paragraph [0075] *<br>* figures 1-8, 10 * | 7,8 | H02M3/00<br>H02M5/293<br>H02M7/219<br><br>ADD.<br>H02M1/12 |
| X | CN 118 100 283 A (UNIV GUANGDONG TECHNOLOGY) 28 May 2024 (2024-05-28)<br>* figures 1-4 * | 1-3, 12-15 | |
| Y | EP 2 589 137 B1 (EATON IND CO [NZ]) 1 April 2020 (2020-04-01)<br>* paragraph [0016] *<br>* paragraph [0027] - paragraph [0029] *<br>* paragraph [0049] *<br>* paragraph [0053] *<br>* paragraph [0055] - paragraph [0056] *<br>* paragraph [0067] - paragraph [0071] *<br>* paragraph [0075] *<br>* figures 1, 2, 5A, 5B, 6 * | 7,8 | |

TECHNICAL FIELDS
SEARCHED (IPC)

H02M

The present search report has been drawn up for all claims

| Place of search | Date of completion of the search | Examiner |
|---|---|---|
| The Hague | 24 October 2025 | Madouroglou, E |

EPO FORM 1503 03.82 (P04C01)

## ANNEX TO THE EUROPEAN SEARCH REPORT
## ON EUROPEAN PATENT APPLICATION NO.

EP 25 17 7256

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2025

| Patent document cited in search report | | Publication date | Patent family member(s) | | Publication date |
|---|---|---|---|---|---|
| CN 115021527 | B | 21-06-2024 | NONE | | |
| CN 118100283 | A | 28-05-2024 | NONE | | |
| EP 2589137 | B1 | 01-04-2020 | CN | 102959841 A | 06-03-2013 |
| | | | EP | 2589137 A2 | 08-05-2013 |
| | | | US | 2013201738 A1 | 08-08-2013 |
| | | | WO | 2012005604 A2 | 12-01-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411305520